# EUROPEAN PATENT APPLICATION

(11) **EP 4 593 487 A1**
(43) Date of publication of application: **30.07.2025**
(21) Application number: 22959237.3
(22) Date of filing: 23.09.2022
(51) Int. Cl.: H04W 72/04

(54) **INFORMATION REPORTING METHOD, AND APPARATUS**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2022/121038
(87) International publication number: WO 2024/060233

(57) **Abstract**

Disclosed in the embodiments of the present disclosure are an information reporting method, and an apparatus, which can be applied to the technical field of communications. The method, which is executed by a terminal device, comprises: in response to sending a random access preamble by using a random access resource associated with a reference signal, reporting, to a network-side device, a first number of times that the random access preamble is continuously sent on the reference signal, wherein the reference signal is an SSB or a CSI-RS. Therefore, when a random access preamble is sent by using a random access resource associated with a reference signal, a terminal device supports the reporting, to a network-side device, of a first number of times that the random access preamble is continuously sent on the reference signal.

## Description

### FIELD

The present disclosure relates to the field of communication technologies, and more particularly to an information reporting method and apparatus.

### BACKGROUND

In a new radio unlicense (NR-U) system, whether a terminal may successfully transmit a random access preamble depends on whether the terminal may perform a successful listen-before-talk (LBT).

In the related art, the terminal does not support, in a case of transmitting the random access preamble using a random access resource associated with a reference signal (for example, a synchronization signal block (SSB) or a channel state information (CSI) reference signal (CSI-RS)), reporting to a network device a numeric count of consecutive transmissions of the random access preamble on the reference signal, which is an urgent problem to be solved.

### SUMMARY

Embodiments of the present disclosure provide an information reporting method and apparatus. A terminal supports reporting to a network device a first numeric count of consecutive transmissions of a random access preamble on a reference signal in a case of transmitting the random access preamble using a random access resource associated with the reference signal.

In a first aspect, an embodiment of the present disclosure provides an information reporting method, which is performed by a terminal, and the method includes: reporting to a network device a first numeric count of consecutive transmissions of a random access preamble on a reference signal in a case of transmitting the random access preamble using a random access resource associated with the reference signal, in which the reference signal is an SSB or a CSI-RS.

In this technical scheme, the terminal reports to the network device the first numeric count of consecutive transmissions of the random access preamble on the reference signal in a case that the random access resource associated with the reference signal is used to transmit the random access preamble, in which the reference signal is the SSB or CSI-RS. Therefore, the terminal supports reporting to the network device the first numeric count of consecutive transmissions of the random access preamble on the reference signal in a case that the random access resource associated with the reference signal is used to transmit the random access preamble.

In a second aspect, an embodiment of the present disclosure provides another information reporting method, which is performed by a network device, and the method includes: receiving a first numeric count of consecutive transmissions of a random access preamble on a reference signal, reported by a terminal, in which the first numeric count is reported by the terminal in a case of transmitting the random access preamble using a random access resource associated with the reference signal, and the reference signal is an SSB or a CSI-RS.

In a third aspect, an embodiment of the present disclosure provides a communication apparatus, which has part or all of functions of the terminal realizing the method described in the first aspect. For example, the function of the communication apparatus may include functions of part or all of the embodiments of the present disclosure, or the communication apparatus may have the function of independently implementing any one of the embodiments of the present disclosure. The functions may be realized by hardware, or in the form of hardware executing corresponding software. The hardware or software includes one or more units or modules corresponding to the above functions.

In an implementation, the structure of the communication apparatus may include a transceiving module and a processing module, and the processing module is configured to support the communication apparatus to perform the corresponding functions in the above method. The transceiving module is configured to support communication between the communication apparatus and other devices. The communication apparatus may further include a storage module for coupling with the transceiving module and the processing module, and storing necessary computer programs and data of the communication apparatus.

In an implementation, the communication apparatus includes a transceiving module configured to report to a network device a first numeric count of consecutive transmissions of a random access preamble on a reference signal, in response to transmitting the random access preamble using a random access resource associated with the reference signal, in which the reference signal is a synchronization signal block (SSB) or a channel state information reference signal (CSI-RS).

In a fourth aspect, an embodiment of the present disclosure provides another communication apparatus, which has part or all of functions of the network device realizing the method described in the second aspect. For example, the function of the communication apparatus may include functions of part or all of the embodiments of the present disclosure, or the communication apparatus may have the function of independently implementing any one of the embodiments of the present disclosure. The functions may be realized by hardware, or in the form of hardware executing corresponding software. The hardware or software includes one or more units or modules corresponding to the above functions.

In an implementation, the structure of the communication apparatus may include a transceiving module and a processing module, and the processing module is configured to support the communication apparatus to perform the corresponding functions in the above method. The transceiving module is configured to support communication between the communication apparatus and other devices. The communication apparatus may further include a storage module for coupling with the transceiving module and the processing module, and storing necessary computer programs and data of the communication apparatus.

In an implementation, the communication apparatus includes a transceiving module configured to receive a first numeric count of consecutive transmissions of a random access preamble on a reference signal reported, by a terminal, in which the first numeric count is reported by the terminal in a case of transmitting the random access preamble using a random access resource associated with the reference signal, and the reference signal is an SSB or a CSI-RS.

In a fifth aspect, an embodiment of the present disclosure provides a communication apparatus, which includes a processor, and when the processor calls a computer program in a memory, the method described in the first aspect is executed.

In a sixth aspect, an embodiment of the present disclosure provides a communication apparatus, which includes a processor, and when the processor calls a computer program in a memory, the method described in the second aspect is executed.

In a seventh aspect, an embodiment of the present disclosure provides a communication apparatus, which includes a processor and a memory. A computer program is stored in the memory, and the processor executes the computer program stored in the memory, to cause the communication apparatus to perform the method described in the first aspect.

In an eighth aspect, an embodiment of the present disclosure provides a communication apparatus, which includes a processor and a memory. A computer program is stored in the memory, and the processor executes the computer program stored in the memory, to cause the communication apparatus to perform the method described in the second aspect.

In a ninth aspect, an embodiment of the present disclosure provides a communication apparatus, which includes a processor and an interface circuit. The interface circuit is configured to receive code instructions and transmit them to the processor, and the processor is configured to run the code instructions to cause the apparatus to perform the method described in the first aspect.

In a tenth aspect, an embodiment of the present disclosure provides a communication apparatus, which includes a processor and an interface circuit. The interface circuit is configured to receive code instructions and transmit them to the processor, and the processor is configured to run the code instructions to cause the apparatus to perform the method described in the second aspect.

In an eleventh aspect, an embodiment of the present disclosure provides an information reporting system, which includes the communication apparatus described in the third aspect and the communication apparatus described in the fourth aspect, or includes the communication apparatus described in the fifth aspect and the communication apparatus described in the sixth aspect, or includes the communication apparatus described in the seventh aspect and the communication apparatus described in the eighth aspect, or includes the communication apparatus described in the ninth aspect and the communication apparatus described in the tenth aspect.

In a twelfth aspect, an embodiment of the present disclosure provides a computer-readable storage medium for storing instructions for the above terminal, and when the instructions are executed, the terminal is caused to perform the method described in the first aspect.

In a thirteenth aspect, an embodiment of the present disclosure provides a readable storage medium for storing instructions for the above network device, and when the instructions are executed, the network device is caused to perform the method described in the second aspect.

In a fourteenth aspect, the present disclosure also provides a computer program product including a computer program, which, when run on a computer, causes the computer to perform the method described in the first aspect.

In a fifteenth aspect, the present disclosure also provides a computer program product including a computer program, which, when run on a computer, causes the computer to perform the method described in the above second aspect.

In a sixteenth aspect, the present disclosure provides a chip system, which includes at least one processor and an interface, and is configured to support a terminal to realize the functions related to the first aspect, for example, determining or processing at least one of data and information involved in the above method. In a possible design, the chip system further includes a memory, and the memory is configured to store computer programs and data necessary for the terminal. The chip system may be composed of chips, and may also include chips and other discrete devices.

In a seventeenth aspect, the present disclosure provides a chip system, which includes at least one processor and an interface, and is configured to support a network device to realize the functions related to the second aspect, for example, determining or processing at least one of data and information involved in the above method. In a possible design, the chip system further includes a memory, and the memory is configured to store computer programs and data necessary for the network device. The chip system may be composed of chips, and may also include chips and other discrete devices.

In an eighteenth aspect, the present disclosure provides a computer program which, when run on a computer, causes the computer to perform the method described in the first aspect.

In a nineteenth aspect, the present disclosure provides a computer program which, when run on a computer, causes the computer to perform the method described in the second aspect.

### BRIEF DESCRIPTION OF THE DRAWINGS

In order to more clearly explain the technical scheme in the embodiments of the present disclosure or the related art, the drawings needed to be used in the embodiments of the present disclosure or the related art will be explained below.
Fig. 1 is a schematic diagram of an architecture of a communication system provided by an embodiment of the present disclosure.
Fig. 2 is a flow chart of an information reporting method provided by an embodiment of the present disclosure.
Fig. 3 is a flow chart of another information reporting method provided by an embodiment of the present disclosure.
Fig. 4 is a flow chart of another information reporting method provided by an embodiment of the present disclosure.
Fig. 5 is a flow chart of another information reporting method provided by an embodiment of the present disclosure.
Fig. 6 is a flow chart of another information reporting method provided by an embodiment of the present disclosure.
Fig. 7 is a flow chart of another information reporting method provided by an embodiment of the present disclosure.
Fig. 8 is a flow chart of another information reporting method provided by an embodiment of the present disclosure.
Fig. 9 is a schematic diagram of a communication apparatus provided by an embodiment of the present disclosure.
Fig. 10 is a schematic diagram of another communication apparatus provided by an embodiment of the present disclosure.
Fig. 11 is a schematic diagram of a chip provided by an embodiment of the present disclosure.

### DETAILED DESCRIPTION

In order to better understand an information reporting method and apparatus disclosed in an embodiment of the present disclosure, a communication system to which the embodiment of the present disclosure applies will be described below.

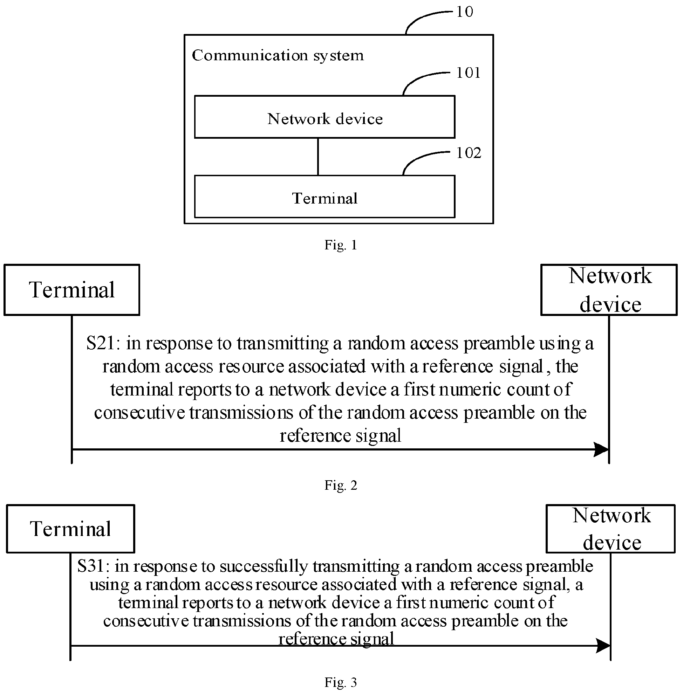

Referring to Fig. 1, Fig. 1 is a schematic diagram of an architecture of a communication system provided by an embodiment of the present disclosure. The communication system may include, but is not limited to, one network device and one terminal. The numbers and forms of devices shown in Fig. 1 are only for example and do not constitute a limitation to the embodiment of the present disclosure. In practical applications, two or more network devices and two or more terminals may be included. A communication system 10 shown in Fig. 1 includes one network device 101 and one terminal 102 as an example.

It should be noted that a technical scheme of the embodiment of the present disclosure may be applied to various communication systems, for example, a long term evolution (LTE) system, a 5th generation (5G) mobile communication system, a 5G new radio (NR) system, or other further new mobile communication systems.

The network device 101 in the embodiment of the present disclosure is an entity for transmitting or receiving signals on a network side. For example, the network device 101 may be an evolved NodeB (eNB), a transmission reception point (TRP), a next generation NodeB (gNB) in a NR system, a base station in other future mobile communication systems or an access node in a wireless fidelity (WiFi) system. The embodiment of the present disclosure does not limit the specific technology and the specific equipment form adopted by the base station. The base station provided by the embodiment of the present disclosure may be composed of a central unit (CU) and distributed units (DUs), in which the CU may also be called a control unit. By adopting the CU-DU structure, the base station, for example, protocol layers of the base station, may be separated, and functions of some protocol layers are centrally controlled by the CU, while functions of some or all of remaining protocol layers are distributed in the DUs, and the DUs are centrally controlled by the CU.

The terminal 102 in the embodiment of the present disclosure is an entity for receiving or transmitting signals on a user side, such as a mobile phone. The terminal may also be called a terminal device, user equipment (UE), a mobile station (MS), a mobile terminal (MT) and so on. The terminal may be a vehicle with a communication function, a smart vehicle, a mobile phone, a wearable device, a Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in transportation safety, a wireless terminal in a smart city, a wireless terminal in a smart home, etc. The embodiment of the present disclosure does not limit the specific technology and the specific equipment form adopted by the terminal.

It may be understood that the communication system described in the embodiment of the present disclosure is for more clearly explaining the technical scheme of the embodiment of the present disclosure, and does not constitute a limitation on the technical scheme provided by the embodiment of the present disclosure. Those skilled in the art may know that with the evolution of the system architecture and the emergence of new business scenarios, the technical scheme provided by the embodiment of the present disclosure is also applicable to similar technical problems.

In addition, in order to facilitate understanding of the embodiments of the present disclosure, the following explanations are made.

First, in the embodiments of the present disclosure, "indication" may include direct indication and indirect indication. When describing certain information to indicate A, it may include that the information indicates A directly or indirectly, but it does not mean that the information must carry A.

If the information indicated by the information is called information to be indicated, there are many ways to indicate the information to be indicated in the specific implementation process, for example, but not limited to, directly indicating the information to be indicated, such as the information to be indicated itself or an index of the information to be indicated. It is also possible to indirectly indicate the information to be indicated by indicating other information, and there is an association relationship between the other information and the information to be indicated. It is also possible to indicate only a part of the information to be indicated, while other parts of the information to be indicated are known or agreed in advance. For example, the indication of specific information may also be achieved by means of a pre-agreed (e.g. protocol-specified) arrangement order of various information, thus reducing the indication overhead to some extent.

The information to be indicated may be sent together as a whole, or divided into multiple sub-information, and the transmission periods and/or timings of these sub-information may be the same or different. The specific transmission method is not limited in the present disclosure. The transmission periods and/or timings of such sub-information may be predefined, for example, according to the protocol.

Second, the embodiments of the present disclosure list a plurality of implementations to clearly explain the technical scheme of the embodiments of the present disclosure. Of course, those skilled in the art may understand that the embodiments provided by the embodiments of the present disclosure may be executed alone, or be executed together after being combined with the methods of other embodiments of the present disclosure, or be executed together with some methods in other related art while being alone or after being combined, which is not limited in the embodiments of the present disclosure.

In the embodiments of the present disclosure, when a connection establishment fails or a connection recovery fails, the terminal will store a connection establishment failure report, and inform the network device that there is an available connection establishment failure report through a connection establishment completion/connection recovery completion/connection reestablishment completion/connection reconfiguration completion message the next time it accesses the network device. The network device may request the connection establishment failure report through a terminal information request message, and the terminal carries the connection establishment failure report through a terminal information response message. Release 17 (R-17) introduces support for the terminal to record a plurality of connection establishment failure reports. The content of the connection establishment failure report is as follows:

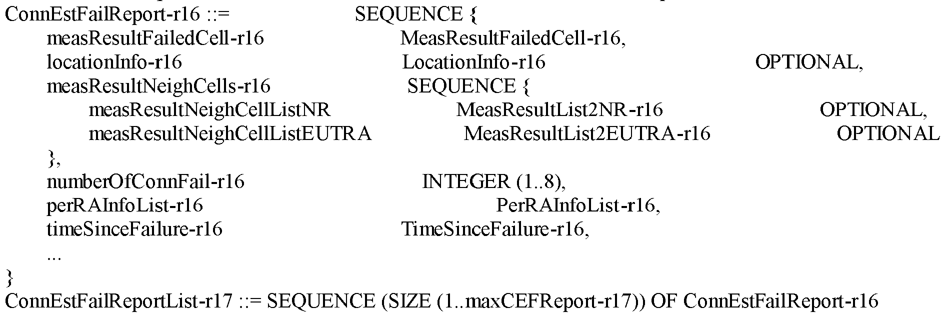

The perRAInfoList-r16 field of each (per) random access information list is mandatory. The perRAInfoList-r16 has the following format:

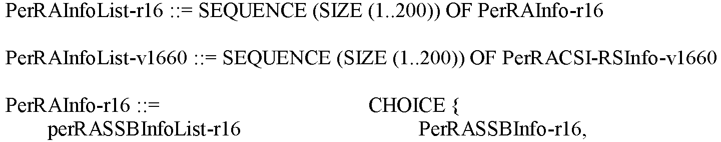

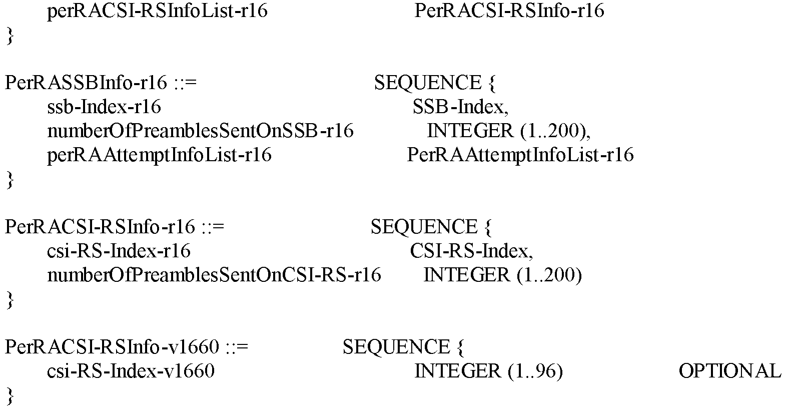

Each random access synchronization signal block information (PerRASSBInfo-r16) must carry a numeric count of transmissions of a random access preamble on an SSB (numberOfPreamblesSentOnSSB-r16) field, and a value range of the numberOfPreamblesSentOnSSB-r16 field is (1, 200). For each SSB, in a case that the terminal uses a random access resource associated with the SSB to transmit the preamble, there will be a PerRASSBInfo-r16 record corresponding to the SSB. The numberOfPreamblesSentOnSSB-r16 records the numeric count of consecutive transmissions of the preamble on the SSB. The minimum value of its value range is 1, because for a non-NR-U scenario, the terminal will definitely send the preamble on the random access resource associated with the SSB at least once. However, for a NR-U scenario, whether the terminal may send the preamble depends on whether the terminal may perform an LBT successfully. In a case that the LBT corresponding to the preamble transmission of the terminal fails, the terminal cannot transmit the preamble. In a case that the LBTs corresponding to all preamble transmissions of the terminal fail, the numeric count of transmissions of the preamble is 0. However, even if there is no successful preamble transmission, the terminal still reports the numeric count of transmissions of the preamble, but it does not support reporting zero.

Similarly, after a radio link failure (RLF) occurs to the terminal, the terminal will also record a RLF report, and its reporting method is similar to that of the connection establishment failure report. In a case that the RLF is caused by a handover failure, the RLF report of the terminal will contain random access public information (ra-InformationCommon), which must also carry the perRAInfoList-r16. In addition, a random access (RA) report and a successful handover report will also carry the ra-InformationCommon. Secondary cell group (SCG) failure information will carry the perRAInfoList-r16. Therefore, they will all encounter the same problem.

Based on this, the embodiments of the present disclosure provide an information reporting method. In a case that a terminal transmits a random access preamble using a random access resource associated with a reference signal, the terminal reports to a network device a first numeric count of consecutive transmissions of a random access preamble on the reference signal, so that the terminal may support reporting to the network device the first numeric count of consecutive transmissions of the random access preamble on the reference signal, in a case that the terminal transmits the random access preamble using the random access resource associated with the reference signal.

In the following, an information reporting method and apparatus provided by the present disclosure will be introduced in detail with reference to the accompanying drawings.

Referring to Fig. 2, Fig. 2 is a flow chart of an information reporting method provided by an embodiment of the present disclosure. As shown in Fig. 2, the method may include, but is not limited to, a following step.

In step S21, in response to transmitting a random access preamble using a random access resource associated with a reference signal, the terminal reports to a network device a first numeric count of consecutive transmissions of the random access preamble on the reference signal, in which the reference signal is an SSB or a CSI-RS.

In the embodiment of the present disclosure, the terminal reports to the network device the first numeric count of consecutive transmissions of the random access preamble on the reference signal, in a case that the terminal transmits the random access preamble using the random access resource associated with the reference signal.

The case that the terminal transmits the random access preamble using the random access resource associated with the reference signal may include the following cases: case 1: the terminal transmits the random access preamble using the random access resource associated with the reference signal and performs the LBT successfully, thus transmitting the random access preamble successfully; or, case 2: the terminal transmits the random access preamble using the random access resource associated with the reference signal and fails to perform a LBT, thus failing to successfully transmit the random access preamble, and so on.

In the embodiment of the present disclosure, the terminal transmits the random access preamble using the random access resource associated with the reference signal, and the reference signal may be the SSB or the CSI-RS.

In a possible implementation, the terminal reports to the network device the first numeric count of consecutive transmissions of the random access preamble on the reference signal, in a case that the terminal transmits the random access preamble using a random access resource associated with the SSB.

For example, in a case that the reference signal is the SSB, the terminal reports to the network device the first numeric count of consecutive transmissions of the random access preamble on SSB#1, in the case that the terminal transmits the random access preamble using a random access resource associated with SSB#1.

In a possible implementation, the terminal reports to the network device the first numeric count of consecutive transmissions of the random access preamble on the reference signal, in a case that the terminal transmits the random access preamble using a random access resources associated with the CSI-RS.

For example, in a case that the reference signal is the CSI-RS, the terminal reports to the network device the first numeric count of consecutive transmissions of the random access preamble on CSI-RS#1, in a case that the terminal transmits the random access preamble using a random access resource associated with CSI-RS#1.

In the embodiment of the present disclosure, in a case that the terminal uses the random access resource associated with the reference signal to transmit the random access preamble, the terminal may store the first numeric count of consecutive transmissions of the random access preamble on the reference signal in advance, and report the first numeric count of consecutive transmissions of the random access preamble on the reference signal to the network device when the network device requests reporting.

It should be noted that the terminal reports to the network device the first numeric count of consecutive transmissions of the random access preamble on the reference signal, in a case of transmitting the random access preamble using the random access resource associated with the reference signal. The first numeric count may be a sum of a numeric count of successful transmissions of the random access preamble on the reference signal and a second numeric count of consecutive transmissions of random access preambles on the reference signal, which are unsuccessful to an LBT failure. Alternatively, the first numeric count may also be a numeric count of successful transmissions of the random access preamble on the reference signal.

In some possible implementations, a case that the terminal uses the random access resource associated with the reference signal to transmit the random access preamble for the first time includes case 1 where the terminal uses the random access resource associated with the reference signal to transmit the random access preamble for the first time, and performs the LBT successfully, thus transmitting the random access preamble successfully. In this case, the terminal reports to the network device the first numeric count of consecutive transmissions of the random access preamble on the reference signal, and the first numeric count may be one.

In some possible implementations, a case that the terminal uses the random access resource associated with the reference signal to transmit the random access preamble for the first time includes case 2 where the terminal uses the random access resource associated with the reference signal to send the random access preamble for the first time and fails to perform a LBT, thus failing to successfully transmit the random access preamble. In this case, the terminal reports to the network device the first numeric count of consecutive transmissions of the random access preamble on the reference signal, and the first numeric count may be zero, or one, or an agreed value, and so on, which is not limited in the embodiment of the present disclosure.

The terminal may determine the agreed value based on the implementation, or based on the protocol agreement, or based on the configuration of the network device, etc., which is not specifically limited by the embodiment of the present disclosure.

In an embodiment, in response to transmitting the random access preamble using the random access resource associated with the reference signal, that the terminal reports to the network device the first numeric count of consecutive transmissions of the random access preamble on the reference signal, includes reporting to the network device the first numeric count of consecutive transmissions of the random access preamble on the reference signal, in response to successfully transmitting the random access preamble using the random access resource associated with the reference signal.

In the embodiment of the present disclosure, that the terminal reports to the network device the first numeric count of consecutive transmissions of the random access preamble on the reference signal in a case of transmitting the random access preamble using the random access resource associated with the reference signal, may be that the terminal reports to the network device the first numeric count of consecutive transmissions of the random access preamble on the reference signal in a case of successfully transmitting the random access preamble using the random access resource associated with the reference signal.

It may be understood that the terminal successfully transmitting the random access preamble using the random access resource associated with the reference signal may mean that the terminal transmits the random access preamble using the random access resource associated with the reference signal, and the LBT corresponding to the transmission of the random access preamble is successful.

For example, the first numeric count is the sum of the numeric count of successful transmissions of the random access preamble on the reference signal and the second numeric count of consecutive transmissions of the random access preamble on the reference signal, which are unsuccessful due to the LBT failure; or, in a case that the first numeric count is the numeric count of successful transmissions of the random access preamble on the reference signal, and in a case that the terminal successfully transmits the random access preamble using the random access resource associated with the reference signal for the first time, the terminal reports to the network device the first numeric count of consecutive transmissions of the random access preamble on the reference signal, and the first numeric count is 1 at this time.

In some embodiments, the terminal reports to the network device a second numeric count of consecutive transmissions of the random access preamble on the reference signal, which are unsuccessful due to an LBT failure, before successfully transmitting the random access preamble using the random access resource associated with the reference signal.

In the embodiment of the present disclosure, in a case that the terminal successfully transmits the random access preamble using the random access resource associated with the reference signal, the terminal reports to the network device the first numeric count of consecutive transmissions of the random access preamble on the reference signal, and the terminal may also report to the network device the second numeric count of consecutive transmissions of the random access preamble on the reference signal, which are unsuccessful due to the LBT failure, before successfully transmitting the random access preamble using the random access resource associated with the reference signal.

For example, taking the reference signal being the SSB as an example, the terminal uses the random access resource associated with SSB#1 to transmit the random access preamble for the first time, and the transmission is unsuccessful due to the LBT failure; the terminal uses the random access resource associated with SSB#1 to transmit the random access preamble for the second time, and the transmission is unsuccessful due to the LBT failure; and, the terminal uses the random access resource associated with SSB#1 to transmit the random access preamble for the third time, and the transmission is successful. In this case, the terminal may report to the network device the first numeric count of consecutive transmissions of the random access preamble on SSB#1, in which the first numeric count is 1, and may report to the network device the second numeric count of consecutive transmissions of the random access preamble on SSB#1, which are unsuccessful due to the LBT failure, before successfully transmitting the random access preamble using the random access resource associated with SSB#1, in which the second numeric count is 2.

It should be noted that the above examples are only for illustration, not as specific limitations to the embodiment of the present disclosure. It should be understood that the terminal may use the same reference signal continuously, or may also use different reference signals continuously.

In some embodiments, in response to the terminal being not configured with an lbt-FailureRecoveryConfig, the terminal reports to the network device a second numeric count of consecutive transmissions of the random access preamble on the reference signal, which are unsuccessful due to an LBT failure, before successfully transmitting the random access preamble using the random access resource associated with the reference signal.

In the embodiment of the present disclosure, only in a case of being not configured with the lbt-FailureRecoveryConfig, the terminal may report to the network device the second numeric count of consecutive transmissions of the random access preamble on the reference signal, which are unsuccessful due to the LBT failure, before successfully transmitting the random access preamble using the random access resource associated with the reference signal.

It may be understood that when the terminal fails to successfully transmit the random access preamble on the random access resource associated with any SSB or CSI-RS, the terminal may select one or more of the SSBs/CSI-RSs on which the terminal has tried to transmit the preamble, to report the numeric count of consecutive transmissions of the preamble on the selected SSB or CSI-RS.

In some embodiments, in response to failing to successfully transmit the random access preamble using random access resources associated with any reference signals, the terminal selects one or more of the reference signals, and reports to the network device a third numeric count of consecutive transmissions of the random access preamble on the selected one or more reference signals.

In the embodiment of the present disclosure, the terminal selects one or more of the reference signals and reports to the network device the third numeric count of consecutive transmissions of the random access preamble on the selected one or more reference signals, in a case that the terminal fails to successfully transmit the random access preamble using the random access resources associated with any reference signals.

The terminal selects one or more of the reference signals, and may select the reference signal whose associated random access resource is first used to transmit the random access preamble, or may select the reference signal whose associated random access resource is last used to transmit the random access preamble, or may select the reference signal whose associated random access resource is used to transmit the random access preamble the most times, or may select the reference signal whose associated random access resource is used to transmit the random access preamble and which has the worst downlink reference signal received power (RSRP), and so on, which is not limited in the embodiment of the present disclosure.

The terminal may select one or more of the reference signals, and may select the reference signal tried first, or the reference signal tried last, or the reference signal tried the most times, or the reference signal with the worst downlink reference signal received power (RSRP), and so on, which is not limited in the embodiment of the present disclosure.

For example, in a case that that the reference signal is the SSB, and the terminal continuously uses the random access resources associated with SSB#1, SSB#2 and SSB#3 to transmit the random access preamble, but fails to successfully transmit the random access preamble using the random access resources associated with any of SSB#1, SSB#2 and SSB#3, one or more of SSB#1, SSB#2, and SSB#3 may be selected. In a case that SSB#3 is selected, the terminal may report to the network device the third numeric count of consecutive transmissions of the random access preamble on SSB#3.

It should be noted that the above example is only for illustration, not as a specific limitation to the embodiment of the present disclosure. It should be understood that the terminal may use the same reference signal continuously, or may also use different reference signals continuously.

In the embodiment of the present disclosure, in a case that the terminal fails to successfully transmit the random access preamble using the random access resources associated with any reference signals, the terminal may select one or more of the reference signals and report to the network device the third numeric count of consecutive transmissions of the random access preamble on the selected one or more reference signals, which is only applicable to a connection establishment failure report, a RLF report caused by a handover failure or random access problem, a random access report caused by a random access failure, a successful handover report triggered by T304, an SCG failure information reporting triggered by a random access failure or an SCG addition/change.

In some embodiments, that the terminal reports to the network device the first numeric count of consecutive transmissions of the random access preamble on the reference signal in response to transmitting the random access preamble using the random access resource associated with the reference signal, includes reporting to the network device the first numeric count of consecutive transmissions of the random access preamble on the reference signal in response to transmitting the random access preamble using the random access resource associated with the reference signal and failing to successfully transmit the random access preamble due to an LBT failure.

In the embodiment of the present disclosure, that the terminal reports to the network device the first numeric count of consecutive transmissions of the random access preamble on the reference signal in a case that the terminal transmits the random access preamble using the random access resource associated with the reference signal, may be that the terminal reports to the network device the first numeric count of consecutive transmissions of the random access preamble on the reference signal, only in a case that the terminal transmits the random access preamble using the random access resource associated with the reference signal and fails to successfully transmit the random access preamble due to the LB T failure.

For example, in a case that the first numeric count is the sum of the numeric count of successful transmissions of the random access preamble on the reference signal and the second numeric count of consecutive transmissions of the random access preamble on the reference signal, which are unsuccessful due to the LBT failure, and in a case that the terminal transmits the random access preamble using the random access resource associated with the reference signal for the first time, and fails to successfully transmit the random access preamble due to the LBT failure, the terminal reports to the network device the first numeric count of consecutive transmissions of the random access preamble on the reference signal, and the first numeric count is 1 at this time.

In some embodiments, that the terminal reports to the network device the first numeric count of consecutive transmissions of the random access preambles on the reference signal in response to transmitting the random access preamble using the random access resource associated with the reference signal, further includes reporting an index of the reference signal to the network device in response to transmitting all random access preambles using the random access resource associated with the reference signal, and failing to successfully transmit each random access preamble due to an LBT failure.

In the embodiment of the present disclosure, the terminal may report to the network device the first numeric count of consecutive transmissions of the random access preamble on the reference signal when transmitting the random access preamble using the random access resource associated with the reference signal, and the terminal may also report the index of the reference signal to the network device when transmitting all the random access preambles using the random access resource associated with the reference signal and failing to successfully transmit each random access preamble due to the LBT failure.

It may be understood that the terminal reports the index of the reference signal to the network device and cancels reporting to the network device the first numeric count of consecutive transmissions of the random access preamble on the reference signal, when transmitting all the random access preambles using the random access resource associated with the reference signal and failing to successfully transmit each random access preamble due to the LBT failure.

In the embodiment of the present disclosure, the terminal reports the index of the reference signal to the network device and cancels reporting to the network device the first numeric count of consecutive transmissions of the random access preamble on the reference signal, when transmitting all the random access preambles using the random access resource associated with the reference signal and failing to successfully transmit each random access preamble due to the LBT failure, in which case the PerRASSBInfo-r16 and PerRACSI-RSInfo-r16 cannot be used, because the preamble number field in them is mandatory. Moreover, their parent IE PerRAInfo-r16 cannot be used either, because they are both mandatory in the parent IE. Thus, a new definition is needed, such as PerRAInfo-r18 IE.

In some embodiments, the first numeric count is a sum of a numeric count of successful transmissions of the random access preamble on the reference signal and a second numeric count of consecutive transmissions of the random access preamble on the reference signal, which are unsuccessful due to an LBT failure.

In the embodiment of the present disclosure, in a case that the terminal transmits the random access preamble using the random access resource associated with the reference signal, it reports to the network device the first numeric count of consecutive transmissions of the random access preamble on the reference signal, and the first numeric count is the sum of the numeric count of successful transmissions of the random access preamble on the reference signal and the second number of consecutive transmissions of the random access preamble on the reference signal, which are unsuccessful due to the LBT failure.

For example, taking the reference signal being the SSB as an example, the terminal uses the random access resource associated with SSB#1 to transmit the random access preamble for the first time, and performs the LBT successfully, thus transmitting the random access preamble successfully sent. In this case, the terminal reports to the network device the first numeric count of consecutive transmissions of the random access preamble on SSB#1, and the first numeric count may be one.

For example, taking the reference signal being the CSI-RS as an example, the terminal uses the random access resource associated with CSI-RS#1 to transmit the random access preamble for the first time and fails to perform the LBT, thus failing to transmit the random access preamble successfully. In this case, the terminal reports to the network device the numeric count of consecutive transmissions of the random access preamble on CSI-RS#1, and the first numeric count may be one.

For example, taking the reference signal being the CSI-RS as an example, the terminal uses the random access resource associated with CSI-RS#1 to transmit the random access preamble for the first time and fails to perform the LBT, thus failing to transmit the random access preamble successfully. In this case, the terminal reports to the network device the first numeric count of consecutive transmissions of the random access preamble on CSI-RS#1, which may be one. Then, the terminal continuously uses the random access resource associated with CSI-RS#1 to transmit the random access preamble for the second time, and performs the LBT successfully, thus transmitting the random access preamble successfully. In this case, the terminal reports to the network device the first numeric count of consecutive transmissions of the random access preamble on CSI-RS#1, and the first numeric count may be two.

It should be noted that the above examples are only for illustration, not as specific limitations to the embodiment of the present disclosure. It should be understood that the terminal may use the same reference signal continuously, or may also use different reference signals continuously.

In some embodiments, that the terminal reports to the network device the first numeric count of consecutive transmissions of the random access preamble on the reference signal, includes: that the terminal reports to the network device the first numeric count of consecutive transmissions of the random access preamble on the reference signal, in a case that the terminal is not configured with an lbt-FailureRecoveryConfig, in which the first numeric count is a sum of a numeric count of successful transmissions of the random access preamble on the reference signal and a second numeric count of consecutive transmissions of the random access preamble on the reference signal, which are unsuccessful due to an LBT failure.

In the embodiment of the present disclosure, the terminal reports to the network device the first numeric count of consecutive transmissions of the random access preamble on the reference signal, in a case that the terminal is not configured with the lbt-FailureRecoveryConfig. At this time, the first numeric count is the sum of the numeric count of successful transmissions of the random access preamble on the reference signal and the second numeric count of consecutive transmissions of the random access preamble on the reference signal, which are unsuccessful due to the LBT failure.

On the contrary, in a case that the terminal is configured with the lbt-FailureRecoveryConfig, the terminal reports to the network device the first numeric count of consecutive transmissions of the random access preamble on the reference signal. At this time, the first numeric count is the numeric count of successful transmissions of the random access preamble on the reference signal.

In the embodiment of the present disclosure, for the connection establishment failure report, the terminal is in an idle state or an inactive state, and the terminal is not configured with the lbt-FailureRecoveryConfig, so that the first numeric count is the sum of the numeric count of successful transmissions of the random access preamble on the reference signal and the second numeric count of consecutive transmissions of the random access preamble on the reference signal, which are unsuccessful due to the LBT failure.

It may be understood that the terminal reports to the network device the first numeric count of consecutive transmissions of the random access preamble on the reference signal in a case that the terminal transmits the random access preamble using the random access resource associated with the reference signal, and the first numeric count is the numeric count of successful transmissions of the random access preamble on the reference signal, and the second numeric count of consecutive transmissions of the random access preamble on the reference signal, which are unsuccessful due to the LBT failure. At this time, the terminal may indicate the numeric count of successful transmissions of the random access preamble on the reference signal or the second numeric count of consecutive transmissions of the random access preamble on the reference signal, which are unsuccessful due to the LBT failure, through a new information element (IE).

In some embodiments, the terminal reports first indication information to the network device, the first indication information indicates a numeric count of successful transmissions of the random access preamble on the reference signal, or a second numeric count of consecutive transmissions of the random access preamble on the reference signal, which are unsuccessful due to an LBT failure.

In the embodiment of the present disclosure, the terminal reports the first indication information to the network device, and the first indication information indicates the numeric count of successful transmissions of the random access preamble on the reference signal, or the second numeric count of consecutive transmissions of the random access preamble on the reference signal, which are unsuccessful due to the LBT failure.

The first indication information may adopt signaling and messages in the related art, or may also adopt new signaling and messages, which is not specifically limited by the embodiment of the present disclosure.

In some embodiments, the first numeric count is the numeric count of successful transmissions of the random access preamble on the reference signal.

In the embodiment of the present disclosure, in a case that the terminal uses the random access resource associated with the reference signal to transmit the random access preamble, it reports to the network device the first numeric count of consecutive transmissions of the random access preamble on the reference signal, and the first numeric count is the numeric count of successful transmissions of the random access preamble on the reference signal.

The first numeric count does not include the second numeric count of consecutive transmissions of the random access preamble on the reference signal, which are unsuccessful due to the LBT failure.

For example, taking the reference signal being the SSB as an example, the terminal uses the random access resource associated with SSB#1 to transmit the random access preamble for the first time, and performs the LBT successfully, thus transmitting the random access preamble successfully. In this case, the terminal reports to the network device the first numeric count of consecutive transmissions of the random access preamble on SSB#1, and the first numeric count may be one.

For example, taking the reference signal being the CSI-RS as an example, the terminal uses the random access resource associated with CSI-RS#1 to transmit the random access preamble for the first time and fails to perform the LBT, thus failing to transmit the random access preamble successfully. In this case, the terminal reports to the network device the first numeric count of consecutive transmissions of the random access preamble on CSI-RS#1, and the first numeric count may be zero.

For example, taking the reference signal being the CSI-RS as an example, the terminal uses the random access resource associated with CSI-RS#1 to transmit the random access preamble for the first time, and fails to perform the LBT, thus failing to transmit the random access preamble successfully. In this case, the terminal reports to the network device the first numeric count of consecutive transmissions of the random access preamble sent on CSI-RS#1, and the first time may be zero or an agreed value. Then, the terminal continuously uses the random access resource associated with CSI-RS#1 to transmit the random access preamble for the second time, and performs the LBT successful, thus transmitting the random access preamble successfully. In this case, the terminal reports to the network device the first numeric count of consecutive transmissions of the random access preamble on CSI-RS#1, and the first numeric count may be one.

It should be noted that the above examples are only for illustration, not as specific limitations to the embodiment of the present disclosure. It should be understood that the terminal may use the same reference signal continuously, or may also use different reference signals continuously.

In some embodiments, that the terminal reports to the network device the first numeric count of consecutive transmissions of the random access preamble on the reference signal, includes: that the terminal reports to the network device the first numeric count of consecutive transmissions of the random access preamble on the reference signal in a case that the terminal is configured with an lbt-FailureRecoveryConfig, in which the first numeric count is a numeric count of successful transmissions of the random access preamble on the reference signal.

In the embodiment of the present disclosure, in a case that the terminal is configured with the lbt-FailureRecoveryConfig, it reports to the network device the first numeric count of consecutive transmissions of the random access preamble on the reference signal, and at this time, the first numeric count is the numeric count of successful transmissions of the random access preamble on the reference signal.

It may be understood that in the case that the first numeric count is the numeric count of successful transmissions of the random access preamble on the reference signal, when the terminal transmits the random access preamble using the random access resource associated with the reference signal and fails to perform the LBT, thus failing to transmit the random access preamble successfully, the terminal may indicate through a new IE the second numeric count of consecutive transmissions of the random access preamble on the reference signal, which are unsuccessful due to the LBT failure.

In some embodiments, the terminal reports second indication information to the network device, and the second indication information indicates a second numeric count of consecutive transmissions of the random access preamble on the reference signal, which are unsuccessful due to an LBT failure.

In the embodiment of the present disclosure, in a case that the terminal uses the random access resource associated with the reference signal to transmit the random access preamble, it reports to the network device the first numeric count of consecutive transmissions of the random access preamble on the reference signal, and the first numeric count is the numeric count of successful transmissions of the random access preamble on the reference signal. At this time, in a case that the terminal uses the random access resource associated with the reference signal to transmit the random access preamble, and fails to successfully transmit the random access preamble due to the LBT failure, the terminal may report the second indication information to the network device, and the second indication information indicates the second numeric count of consecutive transmissions of the random access preamble on the reference signal, which are unsuccessful due to the LBT failure.

It may be understood that in the case that the first numeric count is the numeric count of successful transmissions of the random access preamble on the reference signal, when the number of times for the terminal to successfully transmit the random access preamble using the random access resource associated with the reference signal is 0, and the report reported by the terminal to the network device must include the PerRAInfoList-r16 field, the terminal may set the numberOfPreamblesSentOnSSB-r16 and the numberOfPreamblesSentOnCSI-RS-r16 in the PerRAInfoList-r16 as agreed values, such as 1, 200, etc., or may decide their values based on the implementation of the terminal.

In some embodiments, the terminal reports a first random access information list to the network device in response to the numeric count of successful transmissions of the random access preamble on the reference signal being 0, and the first random access information list includes the first numeric count of an agreed value.

In the embodiment of the present disclosure, the terminal may report the first random access information list to the network device when the numeric count of successful transmissions of the random access preamble on the reference signal is 0, in which the first random access information list includes the first numeric count of the agreed value.

The agreed value may be 1, 200, etc., or the terminal may determine the agreed value based on the implementation, or the terminal may determine the agreed value based on the configuration of the network device, or the terminal may determine the agreed value based on the protocol agreement, etc.

It may be understood that in a case that the first numeric count is the numeric count of successful transmissions of the random access preamble on the reference signal, the terminal may report a report to the network device, the report may carry a newly defined each random access information list (PerRAInfoList), such as PerRAInfoList-r18, which contains an IE, and the IE may represent that the numeric count of successful transmissions of the preamble is 0. For example, whether the numeric count of successful transmissions is 0 is represented by whether the IE is carried, or whether the numeric count of successful transmissions is 0 is represented by setting the IE to true or false, or the IE is set to an interval value with a value range including 0, such as [0, 200]. In a case that the numeric count of successful transmissions of the preamble is 0, the terminal sets this field to a value representing that the numeric count of successful transmissions of the preamble is 0.

In some embodiments, the terminal reports a second random access information list to the network device, the second random access information list includes an information element (IE), and the IE indicates that the numeric count of successful transmissions of the random access preamble is 0.

In the embodiment of the present disclosure, the terminal may report the second random access information list to the network device in a case that the first numeric count is the numeric count of successful transmissions of the random access preamble on the reference signal, in which the second random access information list includes the information element (IE), and the IE indicates that the numeric count of successful transmissions of the random access preamble is 0.

In the embodiment of the present disclosure, in a case that the terminal only needs to report the PerRAInfoList-r18, but does not need to report the PerRAInfoList-r16 (that is, this field is not mandatory), the PerRAInfoList-r18 may contain the perRASSBInfoList and the perRACSI-RSInfoList, and a value of the numeric count of transmissions of the preamble in these two lists contains 0, or this field is optional, and it will not be reported when it is 0. The list also contains an SSB index/a CSI-RS index.

In the embodiment of the present disclosure, in a case that the terminal needs to report both the PerRAInfoList-r18 and the PerRAInfoList-r16 at the same time, the newly defined PerRAInfoList-r18 may be used in combination with the PerRAInfoList-r16, that is, the SSB/CSI-RS index corresponding to each item in the PerRAInfoList-r18 is the same as the SSB/CSI-RS index of each item in the PerRAInfoList-r16. The existing information in each item in the PerRAInfoList-r16 need not be provided in the PerRAInfoList-r18, such as the SSB/CSI-RS index. Each item in the PerRAInfoList-r18 only needs to provide other additional information of its corresponding SSB/CSI-RS, such as information representing that the numeric count of successful transmissions of the preamble is 0.

In the embodiment of the present disclosure, in a case that the network device receives a value in the PerRAInfoList-r18 that represents that the numeric count of successful transmissions of the preamble is 0, the network device may ignore the numberOfPreamblesSentOnSSB-r16 and the numberOfPreamblesSentOnCSI-RS-r16 in the PerRAInfoList-r16 sent by the terminal.

In the embodiment of the present disclosure, the connection establishment failure report, the RLF report caused by the handover failure or random access problem, the random access report caused by the random access failure, the successful handover report triggered by T304, and the SCG failure information reporting triggered by the random access failure or SCG addition/change include not only the PerRAInfoList-r16 IE, but also the redefined PerRAInfoList IE.

In the embodiment of the present disclosure, for the connection establishment failure report IE and the random access report IE, these report IEs may be newly defined, to only contain the redefined PerRAInfoList-r18 IE, but not contain the PerRAInfoList-r16 IE.

In the embodiment of the present disclosure, for the RLF report caused by the handover failure or random access problem, the successful handover report triggered by T304, and the SCG failure information reporting triggered by the random access failure or SCG addition/change, only the redefined PerRAInfoList-r18 IE is reported, and the PerRAInfoList-r16 IE is not contained. Optionally, the PerRAInfoList-r18 IE is used only when the numeric count of transmissions of the preamble is 0.

In some embodiments, the terminal reporting to the network device the first numeric count of consecutive transmissions of the random access preamble on the reference signal, includes at least one of:
reporting a connection establishment failure report to the network device, in which the connection establishment failure report includes the first numeric count of consecutive transmissions of the random access preamble on the reference signal;
reporting a random access report to the network device, in which the random access report includes the first numeric count of consecutive transmissions of the random access preamble on the reference signal;
reporting a radio link failure (RLF) report to the network device, in which the RLF report includes the first numeric count of consecutive transmissions of the random access preamble on the reference signal;
reporting secondary cell group (SCG) failure information to the network device, in which the SCG failure information includes the first numeric count of consecutive transmissions of the random access preamble on the reference signal;
reporting a successful handover report to the network device, in which the successful handover report includes the first numeric count of consecutive transmissions of the random access preamble on the reference signal;
reporting a primary and secondary cell (PScell) successful addition report to the network device, in which the PScell successful addition report includes the first numeric count of consecutive transmissions of the random access preamble on the reference signal; and
reporting a PScell successful change report to the network device, in which the PScell successful change report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting a connection establishment failure report to the network device, in which the connection establishment failure report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting a random access report to the network device, in which the random access report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes reporting a radio link failure (RLF) report to the network device, in which the RLF report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting secondary cell group (SCG) failure information to the network device, in which the SCG failure information includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting a successful handover report to the network device, in which the successful handover report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting a primary and secondary cell (PScell) successful addition report to the network device, in which the PScell successful addition report includes the first numeric count of consecutive transmissions of the random access preamble on the reference signal.

In an embodiment of the present disclosure, the terminal reporting to the network device the first numeric count of consecutive transmissions of the random access preamble on the reference signal in a case that the terminal transmits the random access preamble using the random access resource associated with the reference signal, includes: reporting a PScell successful change report to the network device, in which the PScell successful change report includes the first numeric count of consecutive transmissions of the random access preamble on the reference signal.

It should be noted that the above embodiments are not exhaustive, but only schematic representations of some embodiments, the above embodiments may be implemented alone or in combination thereof, and the above embodiments are only schematic representations, not as specific limitations to the protection scope of the embodiments of the present disclosure.

In the embodiment of the present disclosure, before the terminal reports any one of the connection establishment failure report, random access report, RLF report, SCG failure information, successful handover report, PScell successful addition report and PScell successful change report to the network device, it may record the first numeric count of consecutive transmissions of the random access preamble on the reference signal in a variable corresponding to the report, and then report the report to the network device when the network device requests the report, so as to report to the network device the first numeric count of consecutive transmissions of the random access preamble on the reference signal.

In some embodiments, the reports to the network device the first numeric count of consecutive transmissions of the random access preamble on the reference signal, in response to transmitting the random access preamble using the random access resource associated with the reference signal by adopting a shared spectrum.

In the embodiment of the present disclosure, when the terminal accesses the network device by adopting the shared spectrum, it uses the random access resource associated with the reference signal to transmit the random access preamble, and reports to the network device the first numeric count of consecutive transmissions of the random access preamble on the reference signal. For the description of the first numeric count, reference may be made to the descriptions in the above embodiments, which is not repeated here.

In the embodiment of the present disclosure, the terminal reports to the network device the first numeric count of consecutive transmissions of the random access preamble on the reference signal in a case that the terminal transmits the random access preamble using the random access resource associated with the reference signal, so that the network device may receive the first numeric count of consecutive transmissions of the random access preamble on the reference signal reported by the terminal. The first numeric count is reported by the terminal in a case that the terminal uses the random access resource associated with the reference signal to transmit the random access preamble, and the reference signal is the SSB or CSI-RS.

By implementing the embodiments of the present disclosure, the terminal reports to the network device the first numeric count of consecutive transmissions of the random access preamble on the reference signal in a case that the terminal uses the random access resource associated with the reference signal to transmit the random access preamble, in which the reference signal is the SSB or CSI-RS. Therefore, the terminal supports reporting to the network device the first numeric count of consecutive transmissions of the random access preamble on the reference signal in a case that that the terminal uses the random access resource associated with the reference signal to transmit the random access preamble.

Referring to Fig. 3, Fig. 3 is a flow chart of another information reporting method provided by an embodiment of the present disclosure. As shown in Fig. 3, the method may include, but is not limited to, a following step.

In step S31, in response to successfully transmitting a random access preamble using a random access resource associated with a reference signal, a terminal reports to a network device a first numeric count of consecutive transmissions of the random access preamble on the reference signal, in which the reference signal is an SSB or a CSI-RS.

In the embodiment of the present disclosure, the terminal reports to the network device the first numeric count of consecutive transmissions of the random access preamble on the reference signal only when successfully transmitting the random access preamble using the random access resource associated with the reference signal.

It may be understood that the terminal successfully transmitting the random access preamble using the random access resource associated with the reference signal, may be that the terminal transmits the random access preamble using the random access resource associated with the reference signal, and an LBT corresponding to the transmission of the random access preamble is successful.

It should be noted that the first numeric count may be a sum of a numeric count of successful transmissions of the random access preamble on the reference signal and a second numeric count of consecutive transmissions of the random access preamble on the reference signal, which are unsuccessful due to an LBT failure; or, the first numeric count may also be a numeric count of successful transmissions of the random access preamble on the reference signal.

In some embodiments, the first numeric count is the sum of the numeric count of successful transmissions of the random access preamble on the reference signal and the second numeric count of consecutive transmissions of the random access preamble on the reference signal, which are unsuccessful due to the LBT failure.

In some embodiments, the terminal reports to the network device the first numeric count of consecutive transmissions of the random access preamble on the reference signal in a case that the terminal is not configured with an lbt-FailureRecoveryConfig. The first numeric count is the sum of the numeric count of successful transmissions of the random access preamble on the reference signal and the second numeric count of consecutive transmissions of the random access preamble on the reference signal, which are unsuccessful due to the LBT failure.

In the embodiment of the present disclosure, the terminal reports to the network device the first numeric count of consecutive transmissions of the random access preamble on the reference signal in a case that the terminal is not configured with the lbt-FailureRecoveryConfig. At this time, the first numeric count is the sum of the numeric count of successful transmissions of the random access preamble on the reference signal and the second numeric count of consecutive transmissions of the random access preamble on the reference signal, which are unsuccessful due to the LBT failure.

On the contrary, in a case that the terminal is configured with the lbt-FailureRecoveryConfig, the terminal reports to the network device the first numeric count of consecutive transmissions of the random access preamble on the reference signal. At this time, the first numeric count is the numeric count of successful transmissions of the random access preamble on the reference signal.

In the embodiment of the present disclosure, for a connection establishment failure report, the terminal is in an idle state or an inactive state, and the terminal is not configured with the lbt-FailureRecoveryConfig, so that the first time is the sum of the numeric count of successful transmissions of the random access preamble on the reference signal and the second numeric count of consecutive transmissions of the random access preamble on the reference signal, which are unsuccessful due to the LBT failure.

It may be understood that the terminal reports to the network device the first numeric count of consecutive transmissions of the random access preamble on the reference signal in a case that the terminal transmits the random access preamble using the random access resource associated with the reference signal, and the first time is the sum of the numeric count of successful transmissions of the random access preamble on the reference signal and the second numeric count of consecutive transmissions of the random access preamble on the reference signal, which are unsuccessful due to the LBT failure. At this time, the terminal may indicate through a new information element (IE) the numeric count of successful transmissions of the random access preamble on the reference signal or the second numeric count of consecutive transmissions of the random access preamble on the reference signal, and which are unsuccessful due to the LBT failure.

In some embodiments, the terminal reports first indication information to the network device, the first indication information indicates a numeric count of successful transmissions of the random access preamble on the reference signal, or a second numeric count of consecutive transmissions of the random access preamble on the reference signal, which are unsuccessful due to an LBT failure.

In the embodiment of the present disclosure, the terminal reports the first indication information to the network device, the first indication information indicates the numeric count of successful transmissions of the random access preamble on the reference signal, or the second numeric count of consecutive transmissions of the random access preamble on the reference signal, which are unsuccessful due to the LBT failure.

The first indication information may adopt signaling and messages in the related art, or may also adopt new signaling and messages, which is not specifically limited by the embodiments of the present disclosure.

In some embodiments, the first numeric count is a numeric count of successful transmissions of the random access preamble on the reference signal.

In the embodiment of the present disclosure, in a case that the terminal uses the random access resource associated with the reference signal to transmit the random access preamble, it reports to the network device the first numeric count of consecutive transmissions of the random access preamble on the reference signal, and the first numeric count is the numeric count of successful transmissions of the random access preamble on the reference signal.

The first numeric count does not include the second numeric count of consecutive transmissions of the random access preamble on the reference signal, which are unsuccessful due to the LBT failure.

In some embodiments, that the terminal reports to the network device the first numeric count of consecutive transmissions of the random access preamble on the reference signal, includes that the terminal reports to the network device the first numeric count of consecutive transmissions of the random access preamble on the reference signal in a case that the terminal is configured with an lbt-FailureRecoveryConfig, in which the first numeric count is a numeric count of successful transmissions of the random access preamble on the reference signal.

In the embodiment of the present disclosure, when the terminal is configured with the lbt-FailureRecoveryConfig, it reports to the network device the first numeric count of consecutive transmissions of the random access preamble on the reference signal, and at this time, the first numeric count is the numeric count of successful transmissions of the random access preamble on the reference signal.

It may be understood that in a case that the first numeric count is the numeric count of successful transmissions of the random access preamble on the reference signal, when the terminal transmits the random access preamble using the random access resource associated with the reference signal and fails to perform the LBT, thus failing to transmit the random access preamble successfully, the terminal may indicate through a new IE the second numeric count of consecutive transmissions of the random access preamble on the reference signal, which are unsuccessful due to the LBT failure.

In some embodiments, the terminal reports second indication information to the network device, and the second indication information indicates that a second numeric count of consecutive transmissions of the random access preamble on the reference signal, which are unsuccessful due to an LBT failure.

In the embodiment of the present disclosure, when the terminal uses the random access resource associated with the reference signal to transmit the random access preamble, it reports to the network device the first numeric count of consecutive transmissions of the random access preamble on the reference signal, and the first numeric count is the numeric count of successful transmissions of the random access preamble on the reference signal. At this time, in a case that the terminal uses the random access resource associated with the reference signal to transmit the random access preamble, and the transmission is unsuccessful due to the LBT failure, the terminal may report the second indication information to the network device, and the second indication information indicates the second numeric count of consecutive transmissions of the random access preamble on the reference signal, which are unsuccessful due to the LBT failure.

It may be understood that in a case that the first numeric count is the numeric count of successful transmissions of the random access preamble on the reference signal, when the number of times for the terminal to successfully transmit the random access preamble using the random access resource associated with the reference signal is 0, and the report reported by the terminal to the network device must include the PerRAInfoList-r16 field, the terminal may set the numberOfPreamblesSentOnSSB-r16 and the numberOfPreamblesSentOnCSI-RS-r16 in the PerRAInfoList-r16 as agreed values, such as 1, 200, etc., or decide their values based on the implementation of the terminal.

In some embodiments, the terminal reports a first random access information list to the network device in response to the numeric count of successful transmissions of the random access preamble on the reference signal being 0, in which the first random access information list includes the first numeric count of an agreed value.

In the embodiment of the present disclosure, the terminal may report the first random access information list to the network device in a case that the numeric count of successful transmissions of the random access preamble on the reference signal being 0, in which the first random access information list includes the first numeric count of the agreed value.

The agreed value may be 1, 200, etc., or the terminal may determine the agreed value based on the implementation, or the terminal may determine the agreed value based on the configuration of the network device, or the terminal may determine the agreed value based on the protocol agreement, etc.

It may be understood that when the first numeric count is the numeric count of successful transmissions of the random access preamble on the reference signal, the terminal may report a report to the network device, the report may carry a newly defined each random access information list (PerRAInfoList), such as PerRAInfoList-r18, which contains an IE, and the IE may represent that the numeric count of successful transmissions of the preamble is 0. For example, whether the numeric count of successful transmissions is 0 is represented by whether the IE is carried, or whether the numeric count of successful transmissions is 0 is represented by setting the IE to true or false, or the IE is set to an interval value with a value range including 0, such as [0, 200]. In a case that the numeric count of successful transmissions of the preamble is 0, the terminal sets this field to a value representing that the numeric count of successful transmissions of the preamble is 0.

In some embodiments, the terminal reports a second random access information list to the network device, the second random access information list includes an information element (IE), and the IE indicates that the numeric count of successful transmissions of the random access preamble is 0.

In the embodiment of the present disclosure, the terminal may report the second random access information list to the network device in a case that the first numeric count is the numeric count of successful transmissions of the random access preamble on the reference signal, in which the second random access information list includes the information element (IE), and the IE indicates that the numeric count of successful transmissions of the random access preamble is 0.

In the embodiment of the present disclosure, in a case that the terminal only needs to report the PerRAInfoList-r18, but does not need to report the PerRAInfoList-r16 (that is, this field is not mandatory), the PerRAInfoList-r18 may contain the perRASSBInfoList and the perRACSI-RSInfoList, and a value of the numeric count of transmissions of the preamble in these two lists contains 0, or this field is optional, and it will not be reported when it is 0. The list also contains an SSB index/a CSI-RS index.

In the embodiment of the present disclosure, in a case that the terminal needs to report both the PerRAInfoList-r18 and the PerRAInfoList-r16 at the same time, the newly defined PerRAInfoList-r18 may be used in combination with the PerRAInfoList-r16, that is, the SSB/CSI-RS index corresponding to each item in the PerRAInfoList-r18 is the same as the SSB/CSI-RS index of each item in the PerRAInfoList-r16. The existing information in each item in the PerRAInfoList-r16 need not be provided in the PerRAInfoList-r18, such as the SSB/CSI-RS index. Each item in the PerRAInfoList-r18 only needs to provide other additional information of its corresponding SSB/CSI-RS, such as information representing that the numeric count of successful transmissions of the preamble is 0.

In the embodiment of the present disclosure, in a case that the network device receives a value in the PerRAInfoList-r18 that represents that the numeric count of successful transmissions of the preamble is 0, the network device may ignore the numberOfPreamblesSentOnSSB-r16 and the numberOfPreamblesSentOnCSI-RS-r16 in the PerRAInfoList-r16 sent by the terminal.

In the embodiment of the present disclosure, the connection establishment failure report, the RLF report caused by the handover failure or random access problem, the random access report caused by the random access failure, the successful handover report triggered by T304, and the SCG failure information reporting triggered by the random access failure or SCG addition/change include not only the PerRAInfoList-r16 IE, but also the redefined PerRAInfoList IE.

In the embodiment of the present disclosure, for the connection establishment failure report IE and the random access report IE, these report IEs may be newly defined, to only contain the redefined PerRAInfoList-r18 IE, but not contain the PerRAInfoList-r16 IE.

In the embodiment of the present disclosure, for the RLF report caused by the handover failure or random access problem, the successful handover report triggered by T304, and the SCG failure information reporting triggered by the random access failure or SCG addition/change, only the redefined PerRAInfoList-r18 IE is reported, and the PerRAInfoList-r16 IE is not contained. Optionally, the PerRAInfoList-r18 IE is used only when the numeric count of transmissions of the preamble is 0.

It should be noted that in the embodiment of the present disclosure, step S31 may be implemented alone or in combination with any other steps in the embodiments of the present disclosure, for example, in combination with step S21 in the embodiment of the present disclosure, which is not limited in the embodiments of the present disclosure.

By implementing the embodiment of the present disclosure, the terminal reports to the network device the first numeric count of consecutive transmissions of the random access preamble on the reference signal in a case that the terminal successfully transmits the random access preamble using the random access resource associated with the reference signal, in which the reference signal is the SSB or CSI-RS. Therefore, the terminal supports reporting to the network device the first numeric count of consecutive transmissions of the random access preamble on the reference signal in a case that the terminal successfully transmits the random access preamble using the random access resource associated with the reference signal.

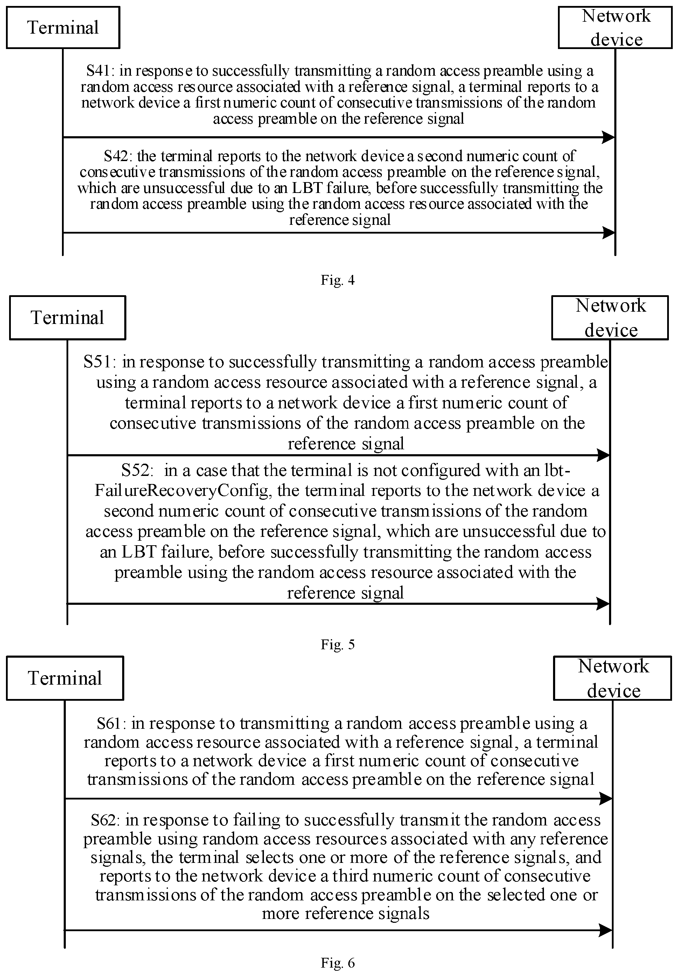

Referring to Fig. 4, Fig. 4 is a flow chart of another information reporting method provided by an embodiment of the present disclosure. As shown in Fig. 4, the method may include, but is not limited to, a following step.

In step S41, in response to successfully transmitting a random access preamble using a random access resource associated with a reference signal, a terminal reports to a network device a first numeric count of consecutive transmissions of the random access preamble on the reference signal, in which the reference signal is an SSB or a CSI-RS.

For the relevant description of step S41, reference may be made to the relevant descriptions in the above embodiments, which will not be repeated here.

In step S42, the terminal reports to the network device a second numeric count of consecutive transmissions of the random access preamble on the reference signal, which are unsuccessful due to an LBT failure, before successfully transmitting the random access preamble using the random access resource associated with the reference signal.

In the embodiment of the present disclosure, when the terminal successfully transmits the random access preamble using the random access resource associated with the reference signal, it reports to the network device the first numeric count of consecutive transmissions of the random access preamble on the reference signal, and it may also report to the network device the second numeric count of consecutive transmissions of the random access preamble on the reference signal, which are unsuccessful due to the LBT failure, before successfully transmitting the random access preamble using the random access resource associated with the reference signal.

For example, taking the reference signal being the SSB as an example, the terminal uses the random access resource associated with SSB#1 to transmit the random access preamble for the first time, and the transmission is unsuccessful due to the LBT failure; the terminal uses the random access resource associated with SSB#1 to transmit the random access preamble for the second time, and the transmission is unsuccessful due to the LBT failure; and, the terminal uses the random access resource associated with SSB#1 to transmit the random access preamble for the third time, and the transmission is successful. In this case, the terminal may report to the network device the first numeric count of consecutive transmissions of the random access preamble on SSB#1, in which the first numeric count is 1, and may report to the network device the second numeric count of consecutive transmissions of the random access preamble on SSB#1, which are unsuccessful due to the LBT failure, before successfully transmitting the random access preamble using the random access resource associated with SSB#1, in which the second numeric count is 2.

It should be noted that the above example is only for illustration, not as a specific limitation to the embodiment of the present disclosure. It should be understood that the terminal may use the same reference signal continuously, or may also use different reference signals continuously.

It should be noted that the first numeric count may be a sum of a numeric count of successful transmissions of the random access preamble on the reference signal and the second numeric count of consecutive transmissions of the random access preamble on the reference signal, which are unsuccessful due to the LBT failure; or, the first numeric count may also be a numeric count of successful transmissions of the random access preamble on the reference signal.

The method for the terminal to report to the network device the first numeric count of consecutive transmissions of the random access preamble on the reference signal may be found in the relevant descriptions in the above embodiments, which will not be repeated here.

In some embodiments, the terminal may also report first indication information to the network device in a case that the first numeric count is the sum of the numeric count of successful transmissions of the random access preamble on the reference signal and the second numeric count of consecutive transmissions of the random access preamble on the reference signal, which are unsuccessful due to the LBT failure, in which the first indication information indicates the numeric count of successful transmissions of the random access preamble on the reference signal, or the second numeric count of consecutive transmissions of the random access preamble on the reference signal, which are unsuccessful due to the LBT failure.

The first indication information may adopt signaling and messages in the related art, or may also adopt new signaling and messages, which is not specifically limited by the embodiments of the present disclosure.

In some embodiments, in a case that the first numeric count is the numeric count of successful transmissions of the random access preamble on the reference signal, the terminal may report second indication information to the network device, and the second indication information indicates that a second numeric count of consecutive transmissions of the random access preamble on the reference signal, which are unsuccessful due to an LBT failure.

In the embodiment of the present disclosure, when the terminal uses the random access resource associated with the reference signal to transmit the random access preamble, it reports to the network device the first numeric count of consecutive transmissions of the random access preamble on the reference signal, and the first numeric count is the numeric count of successful transmissions of the random access preamble on the reference signal. At this time, in a case that the terminal uses the random access resource associated with the reference signal to transmit the random access preamble, and the transmission is unsuccessful due to the LBT failure, the terminal may report the second indication information to the network device, and the second indication information indicates the second numeric count of consecutive transmissions of the random access preamble on the reference signal, which are unsuccessful due to the LBT failure.

It may be understood that in a case that the first numeric count is the numeric count of successful transmissions of the random access preamble on the reference signal, when the number of times for the terminal to successfully transmit the random access preamble using the random access resource associated with the reference signal is 0, and the report reported by the terminal to the network device must include the PerRAInfoList-r16 field, the terminal may set the numberOfPreamblesSentOnSSB-r16 and the numberOfPreamblesSentOnCSI-RS-r16 in the PerRAInfoList-r16 as agreed values, such as 1, 200, etc., or decide their values based on the implementation of the terminal.

It should be noted that in the embodiment of the present disclosure, steps S41 and S42 may be implemented separately, or together with any other steps in the embodiments of the present disclosure, for example, together with step S21 and/or step S31 in the embodiments of the present disclosure, which is not limited by the embodiments of the present disclosure.

By implementing the embodiment of the present disclosure, the terminal reports to the network device the first numeric count of consecutive transmissions of the random access preamble on the reference signal in a case that the terminal successfully transmits the random access preamble using the random access resource associated with the reference signal, in which the reference signal is the SSB or CSI-RS, and the terminal reports to the network device the second numeric count of consecutive transmissions of the random access preamble on the reference signal, which are unsuccessful due to the LBT failure, before successfully transmitting the random access preamble using the random access resource associated with the reference signal. Therefore, the terminal supports reporting to the network device the first numeric count of consecutive transmissions of the random access preamble on the reference signal when successfully transmitting the random access preamble using the random access resource associated with the reference signal, and also reporting to the network device the second numeric count of consecutive transmissions of the random access preamble on the reference signal, which are unsuccessful due to the LBT failure, before successfully transmitting the random access preamble using the random access resource associated with the reference signal.

Referring to Fig. 5, Fig. 5 is a flow chart of another information reporting method provided by an embodiment of the present disclosure. As shown in Fig. 5, the method may include, but is not limited to, the following steps.

In step S51, in response to successfully transmitting a random access preamble using a random access resource associated with a reference signal, a terminal reports to a network device a first numeric count of consecutive transmissions of the random access preamble on the reference signal, in which the reference signal is an SSB or a CSI-RS.

For the relevant description of step S51, reference may be made to the relevant descriptions in the above embodiments, which will not be repeated here.

In step S52, in a case that the terminal is not configured with an lbt-FailureRecoveryConfig, the terminal reports to the network device a second numeric count of consecutive transmissions of the random access preamble on the reference signal, which are unsuccessful due to an LBT failure, before successfully transmitting the random access preamble using the random access resource associated with the reference signal.

In the embodiment of the present disclosure, in a case that the terminal successfully transmits the random access preamble using the random access resource associated with the reference signal, it reports to the network device the first numeric count of consecutive transmissions of the random access preamble on the reference signal, or in a case that the terminal is not configured with the lbt-FailureRecoveryConfig, it may report to the network device the second numeric count of consecutive transmissions of the random access preamble on the reference signal, which are unsuccessful due to the LBT failure, before successfully transmitting the random access preamble using the random access resource associated with the reference signal.

The terminal may report to the network device the second numeric count of consecutive transmissions of the random access preamble on the reference signal, which are unsuccessful due to the LBT failure, before successfully transmitting the random access preamble using the random access resource associated with the reference signal, only in a case that the terminal is not configured with the lbt-FailureRecoveryConfig.

It should be noted that the first numeric count may be a sum of a numeric count of successful transmissions of the random access preamble on the reference signal and the second numeric count of consecutive transmissions of the random access preamble on the reference signal, which are unsuccessful due to the LBT failure; or, the first numeric count may also be a numeric count of successful transmissions of the random access preamble on the reference signal.

The method for the terminal to report to the network device the first numeric count of consecutive transmissions of the random access preamble on the reference signal may be found in the relevant descriptions in the above embodiments, which will not be repeated here.

The method for the terminal to report to the network device the second numeric count of consecutive transmissions of the random access preamble on the reference signal, which are unsuccessful due to the LBT failure, before successfully transmitting the random access preamble using the random access resource associated with the reference signal, may be found in the relevant descriptions in the above embodiments, which will not be repeated here.

It should be noted that in the embodiment of the present disclosure, steps S51 and S52 may be implemented separately or in combination with any other steps in the embodiments of the present disclosure, for example, in combination with step S21 and/or step S31 and/or steps S41 and S42 in the embodiments of the present disclosure, which is not limited by the embodiments of the present disclosure.

By implementing the embodiment of the present disclosure, the terminal reports to the network device the first numeric count of consecutive transmissions of the random access preamble on the reference signal when successfully transmitting the random access preamble using the random access resource associated with the reference signal, in which the reference signal is the SSB or CSI-RS, and in a case that the terminal is not configured with the lbt-FailureRecoveryConfig, the terminal may also report to the network device the second numeric count of consecutive transmissions of the random access preamble on the reference signal, which are unsuccessful due to the LBT failure, before successfully transmitting the random access preamble using the random access resource associated with the reference signal. Therefore, the terminal supports reporting to the network device the first numeric count of consecutive transmissions of the random access preamble on the reference signal when successfully transmitting the random access preamble using the random access resource associated with the reference signal, and also reporting to the network device the second numeric count of consecutive transmissions of the random access preamble on the reference signal, which are unsuccessful due to the LBT failure, before successfully transmitting the random access preamble using the random access resource associated with the reference signal, when the terminal is not configured with the lbt-FailureRecoveryConfig.

Referring to Fig. 6, Fig. 6 is a flow chart of another information reporting method provided by an embodiment of the present disclosure. As shown in Fig. 6, the method may include, but is not limited to, the following steps.

In step S61, in response to transmitting a random access preamble using a random access resource associated with a reference signal, a terminal reports to a network device a first numeric count of consecutive transmissions of the random access preamble on the reference signal, in which the reference signal is an SSB or a CSI-RS.

For the relevant description of step S61, reference may be made to the relevant descriptions in the above embodiments, which is not repeated here.

In step S62, in response to failing to successfully transmit the random access preamble using random access resources associated with any reference signals, the terminal selects one or more of the reference signals, and reports to the network device a third numeric count of consecutive transmissions of the random access preamble on the selected one or more reference signals.

It may be understood that when the terminal fails to successfully transmit the random access preamble on the random access resource associated with any SSB or CSI-RS, the terminal may select one or more of the SSBs/CSI-RSs on which the terminal has tried to transmit the preamble, to report the numeric count of consecutive transmissions of the preamble on the selected SSB or CSI-RS.

In the embodiment of the present disclosure, in a case that the terminal fails to successfully transmit the random access preamble using the random access resources associated with any reference signals, it may select one or more of the reference signals, and report to the network device the third numeric count of consecutive transmissions of the random access preamble on the selected one or more reference signals.

The terminal selects one or more of the reference signals, and may select the reference signal whose associated random access resource is first used to transmit the random access preamble, or may select the reference signal whose associated random access resource is last used to transmit the random access preamble, or may select the reference signal whose associated random access resource is used to transmit the random access preamble the most times, or may select the reference signal whose associated random access resource is used to transmit the random access preamble and which has the worst downlink reference signal received power (RSRP), and so on, which is not limited in the embodiment of the present disclosure.

The terminal may select one or more of the reference signals, and may select the reference signal tried first, or the reference signal tried last, or the reference signal tried the most times, or the reference signal with the worst downlink reference signal received power (RSRP), and so on, which is not limited in the embodiment of the present disclosure.

For example, in a case that that the reference signal is the SSB, and the terminal continuously uses the random access resources associated with SSB#1, SSB#2 and SSB#3 to transmit the random access preamble, but fails to successfully transmit the random access preamble using the random access resources associated with any of SSB#1, SSB#2 and SSB#3, one or more of SSB#1, SSB#2, and SSB#3 may be selected. In a case that SSB#3 is selected, the terminal may report to the network device the third numeric count of consecutive transmissions of the random access preamble on SSB#3.

It should be noted that the above example is only for illustration, not as a specific limitation to the embodiment of the present disclosure. It should be understood that the terminal may use the same reference signal continuously, or may also use different reference signals continuously.

In the embodiment of the present disclosure, in a case that the terminal fails to successfully transmit the random access preamble using the random access resources associated with any reference signals, it may select one or more of the reference signals and report to the network device the third numeric count of consecutive transmissions of the random access preamble on the selected one or more reference signals, which is only applicable to the connection establishment failure report, the RLF report caused by the handover failure or random access problem, the random access report caused by the random access failure, the successful handover report triggered by T304, and the SCG failure information reporting triggered by the random access failure or SCG addition/change.

It should be noted that the first numeric count may be a sum of a numeric count of successful transmissions of the random access preamble on the reference signal and the second numeric count of consecutive transmissions of the random access preamble on the reference signal, which are unsuccessful due to the LBT failure; or, the first numeric count may also be a numeric count of successful transmissions of the random access preamble on the reference signal.

The method for the terminal to report to the network device the first numeric count of consecutive transmissions of the random access preamble on the reference signal may be found in the relevant descriptions in the above embodiments, which will not be repeated here.

It should be noted that in the embodiment of the present disclosure, steps S61 and S62 may be implemented separately or in combination with any other steps in the embodiments of the present disclosure, for example, in combination with step S21 and/or step S31 and/or steps S41 and S42 and/or steps S51 and S52 in the embodiments of the present disclosure, which is not limited by the embodiments of the present disclosure.

By implementing the embodiment of the present disclosure, the terminal reports to the network device the first numeric count of consecutive transmissions of the random access preamble on the reference signal in a case that the terminal transmits the random access preamble using the random access resource associated with the reference signal, in which the reference signal is the SSB or CSI-RS, and in a case that the terminal fails to successfully transmit the random access preamble using the random access resources associated with any reference signals, the terminal selects one or more of the reference signals, and reports to the network device the third numeric count of consecutive transmissions of the random access preamble on the selected one or more reference signals. Therefore, the terminal supports reporting to the network device the first numeric count of consecutive transmissions of the random access preamble on the reference signal in a case that the terminal transmits the random access preamble using the random access resource associated with the reference signal, and also selecting one or more of the reference signals, and reporting to the network device the third numeric count of consecutive transmissions of the random access preamble on the selected one or more reference signals, in a case that the terminal fails to successfully transmit the random access preamble using the random access resources associated with any reference signals.

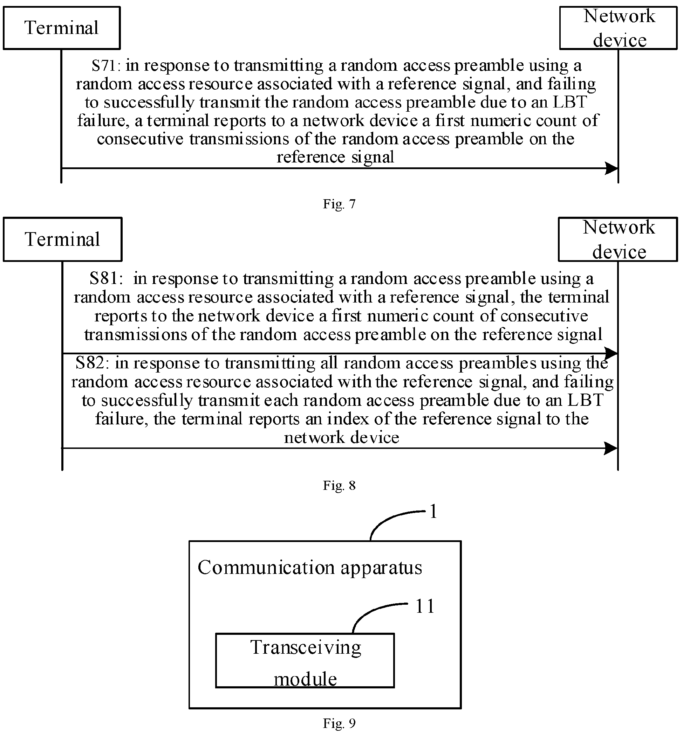

Referring to Fig. 7, Fig. 7 is a flow chart of another information reporting method provided by an embodiment of the present disclosure. As shown in Fig. 7, the method may include, but is not limited to, a following step.

In step S71, in response to transmitting a random access preamble using a random access resource associated with a reference signal, and failing to successfully transmit the random access preamble due to an LBT failure, a terminal reports to a network device a first numeric count of consecutive transmissions of the random access preamble on the reference signal, in which the reference signal is an SSB or a CSI-RS.

In the embodiment of the present disclosure, the terminal may report to the network device the first numeric count of consecutive transmissions of the random access preamble on the reference signal only when transmitting the random access preamble using the random access resource associated with the reference signal and failing to successfully transmit the random access preamble due to the LBT failure.

It should be noted that the first numeric count may be a sum of a numeric count of successful transmissions of the random access preamble on the reference signal and a second numeric count of consecutive transmissions of the random access preamble on the reference signal, which are unsuccessful due to an LBT failure; or, the first numeric count may also be a numeric count of successful transmissions of the random access preamble on the reference signal.

The method for the terminal to report to the network device the first numeric count of consecutive transmissions of the random access preamble on the reference signal may be found in the relevant descriptions in the above embodiments, which will not be repeated here.

It should be noted that in the embodiment of the present disclosure, step S71 may be implemented alone or in combination with any other steps in the embodiments of the present disclosure, for example, in combination with step S21 and/or steps S61 and S62 in the embodiments of the present disclosure, which is not limited by the embodiments of the present disclosure.

By implementing the embodiment of the present disclosure, the terminal reports to the network device the first numeric count of consecutive transmissions of the random access preamble on the reference signal when transmitting the random access preamble using the random access resource associated with the reference signal and failing to successfully transmit the random access preamble due to the LBT failure, in which the reference signal is the SSB or CSI-RS. Therefore, the terminal supports reporting to the network device the first numeric count of consecutive transmissions of the random access preamble on the reference signal when transmitting the random access preamble using the random access resource associated with the reference signal and failing to successfully transmit the random access preamble due to the LBT failure.

Referring to Fig. 8, Fig. 8 is a flow chart of another information reporting method provided by an embodiment of the present disclosure. As shown in Fig. 8, the method may include, but is not limited to, the following steps.

In step S81, in response to transmitting a random access preamble using a random access resource associated with a reference signal, the terminal reports to the network device a first numeric count of consecutive transmissions of the random access preamble on the reference signal, in which the reference signal is an SSB or a CSI-RS.

For the description of step S81, reference may be made to the relevant descriptions in the above embodiments, which is not repeated here.

The method for the terminal to report to the network device the first numeric count of consecutive transmissions of the random access preamble on the reference signal may be found in the relevant descriptions in the above embodiments, which will not be repeated here.

In step S82, in response to transmitting all random access preambles using the random access resource associated with the reference signal, and failing to successfully transmit each random access preamble due to an LBT failure, the terminal reports an index of the reference signal to the network device.

In the embodiment of the present disclosure, the terminal may report to the network device the first numeric count of consecutive transmissions of the random access preamble on the reference signal when transmitting the random access preamble using the random access resource associated with the reference signal, and the terminal may also report the index of the reference signal to the network device when transmitting all the random access preambles using the random access resource associated with the reference signal and failing to successfully transmit each random access preamble due to the LBT failure.

It may be understood that, in a case that the terminal transmits all the random access preambles using the random access resource associated with the reference signal and fails to successfully transmit each random access preamble due to the LBT failure, the terminal reports the index of the reference signal to the network device, and cancels reporting to the network device the first numeric count of consecutive transmissions of the random access preamble on the reference signal.

In the embodiment of the present disclosure, the terminal reports the index of the reference signal to the network device and cancels reporting to the network device the first numeric count of consecutive transmissions of the random access preamble on the reference signal, when transmitting all the random access preambles using the random access resource associated with the reference signal and failing to successfully transmit each random access preamble due to the LBT failure, in which case the PerRASSBInfo-r16 and PerRACSI-RSInfo-r16 cannot be used, because the preamble number field in them is mandatory. Moreover, their parent IE PerRAInfo-r16 cannot be used either, because they are both mandatory in the parent IE. Thus, a new definition is needed, such as PerRAInfo-r18 IE.

It should be noted that in the embodiment of the present disclosure, steps S81 and S82 may be implemented separately or in combination with any other steps in the embodiments of the present disclosure, for example, in combination with step S21 and/or step S31 and/or steps S41 and S42 and/or steps S51 and S52 and/or steps S61 and S62 and/or step S71 in the embodiment of the present disclosure, which is not limited by the embodiments of the present disclosure.

By implementing the embodiment of the present disclosure, the terminal reports to the network device the first numeric count of consecutive transmissions of the random access preamble on the reference signal when transmitting the random access preamble using the random access resource associated with the reference signal, in which the reference signal is the SSB or CSI-RS, and the terminal may also report the index of the reference signal to the network device when transmitting all the random access preambles using the random access resource associated with the reference signal and failing to successfully transmit each random access preamble due to the LBT failure. Therefore, the terminal supports reporting to the network device the first numeric count of consecutive transmissions of the random access preamble on the reference signal when transmitting the random access preamble using the random access resource associated with the reference signal, and reporting the index of the reference signal to the network device when transmitting all the random access preambles using the random access resource associated with the reference signal and failing to successfully transmit each random access preamble due to the LBT failure.

Continuing to refer to Fig. 2, in the embodiment of the present disclosure, an information reporting method executed by the network device includes a following step.

In step S21, a first numeric count of consecutive transmissions of a random access preamble on a reference signal, reported by a terminal, is received, in which the first numeric count is reported by the terminal when transmitting the random access preamble using a random access resource associated with the reference signal, and the reference signal is an SSB or a CSI-RS.

As shown in Fig. 3, in some embodiments, the first numeric count is reported by the terminal when successfully transmitting the random access preamble using the random access resource associated with the reference signal.

As shown in Fig. 4, in some embodiments, the network device also receives a second numeric count of consecutive transmissions of the random access preamble on the reference signal, which are unsuccessful due to an LBT failure, before the random access preamble is successfully transmitted using the random access resource associated with the reference signal, in which the second numeric count is reported by the terminal.

As shown in Fig. 5, in some embodiments, the second numeric count is reported by the terminal when being not configured with an lbt-FailureRecoveryConfig.

As shown in Fig. 6, in some embodiments, the network device also receives a third numeric count of consecutive transmissions of the random access preamble on one or more selected reference signals, reported by the terminal, in which the third numeric count is reported by the terminal when failing to successfully transmit the random access preamble using random access resources associated with any reference signals, and selecting one or more of the reference signals.

As shown in Fig. 7, in some embodiments, the first numeric count is reported by the terminal when transmitting the random access preamble using the random access resource associated with the reference signal, and failing to successfully transmit the random access preamble due to an LBT failure.

As shown in Fig. 8, in some embodiments, the network device also receives an index of the reference signal reported by the terminal, in which the index of the reference signal is reported by the terminal when transmitting all random access preambles using the random access resource associated with the reference signal, and failing to successfully transmit each random access preamble due to an LBT failure.

In some embodiments, the first numeric count is a sum of a numeric count of successful transmissions of the random access preamble on the reference signal and a second numeric count of consecutive transmissions of the random access preamble on the reference signal, which are unsuccessful due to an LBT failure.

In some embodiments, the first numeric count is reported by the terminal when being not configured with an lbt-FailureRecoveryConfig.

In some embodiments, the network device receives first indication information reported by the terminal, in which the first indication information indicates a numeric count of successful transmissions of the random access preamble on the reference signal, or a second numeric count of consecutive transmissions of the random access preamble on the reference signal, which are unsuccessful due to an LBT failure.

In some embodiments, the first numeric count is a numeric count of successful transmissions of the random access preamble on the reference signal.

In some embodiments, the first numeric count is reported by the terminal when being configured with an lbt-FailureRecoveryConfig.

In some embodiments, the network device receives second indication information reported by the terminal, in which the second indication information indicates a second numeric count of consecutive transmissions of the random access preamble on the reference signal, and which are unsuccessful due to an LBT failure.

In some embodiments, the network device receiving the first numeric count of consecutive transmissions of the random access preamble on the reference signal reported by the terminal includes: receiving a first random access information list reported by the terminal, in which the first random access information list is reported by the terminal when the numeric count of successful transmissions of the random access preamble on the reference signal is 0, and the first random access information list includes the first numeric count of an agreed value.

In some embodiments, the network device receiving the first numeric count of consecutive transmissions of the random access preamble on the reference signal reported by the terminal includes: receiving a second random access information list reported by the terminal, in which the second random access information list includes an information element (IE), and the IE indicates that the numeric count of successful transmissions of the random access preamble is 0.

In some embodiments, the network device receiving the first numeric count of consecutive transmissions of the random access preamble on the reference signal reported by the terminal includes at least one of:
receiving a connection establishment failure report reported by the terminal, in which the connection establishment failure report includes the first numeric count of consecutive transmissions of the random access preamble on the reference signal;
receiving a random access report reported by the terminal, in which the random access report includes the first numeric count of consecutive transmissions of the random access preamble on the reference signal;
receiving an RLF report reported by the terminal, in which the RLF report includes the first numeric count of consecutive transmissions of the random access preamble on the reference signal;
receiving SCG failure information reported by the terminal, in which the SCG failure information includes the first numeric count of consecutive transmissions of the random access preamble on the reference signal;
receiving a successful handover report reported by the terminal, in which the successful handover report includes the first numeric count of consecutive transmissions of the random access preamble on the reference signal;
receiving a PScell successful addition report reported by the terminal, in which the PScell successful addition report includes the first numeric count of consecutive transmissions of the random access preamble on the reference signal; or
receiving a PScell successful change report reported by the terminal, in which the PScell successful change report includes the first numeric count of consecutive transmissions of the random access preamble on the reference signal.

In some embodiments, the first numeric count is reported by the terminal when transmitting the random access preamble using the random access resource associated with the reference signal by adopting a shared spectrum.

It should be noted that the relevant content of the information reporting method performed by the network device in the embodiment of the present disclosure has been described in detail in the information reporting method performed by the terminal. Reference may be made to the related description of the information reporting method performed by the terminal for the relevant content, which is not repeated here.

In the above embodiments provided by the present disclosure, the methods provided by the embodiments of the present disclosure are introduced from the perspective of interaction between the terminal and the network device. In order to realize the functions in the methods provided by the embodiments of the present disclosure, the terminal and the network device may include hardware structures and software modules, and the above functions are realized in the form of hardware structures, software modules, or hardware structures plus software modules. A certain one of the above functions may be implemented in the form of hardware structures, software modules, or hardware structures plus software modules.

Referring to Fig. 9, Fig. 9 is a schematic diagram of a communication apparatus 1 provided by an embodiment of the present disclosure. The communication apparatus 1 shown in Fig. 9 may include a transceiving module 11 and a processing module. The transceiving module may include a transmitting module and/or a receiving module, the transmitting module is used for realizing a transmitting function, and the receiving module is used for realizing a receiving function, so that the transceiving module may realize the transmitting function and/or the receiving function.

The communication apparatus 1 may be a terminal, an apparatus in a terminal, or an apparatus that may be used in conjunction with a terminal. Alternatively, the communication apparatus 1 may be a network device, an apparatus in a network device, or an apparatus that may be used in conjunction with a network device.

The communication apparatus 1 is the terminal.

The apparatus includes a transceiving module 11.

The transceiving module 11 is configured to, in response to transmitting a random access preamble using a random access resource associated with a reference signal, report to a network device a first numeric count of consecutive transmissions of the random access preamble on the reference signal, in which the reference signal is an SSB or a CSI-RS.

In some embodiments, the transceiving module 11 is further configured to report to the network device the first numeric count of consecutive transmissions of the random access preamble on the reference signal in response to successfully transmitting the random access preamble using the random access resource associated with the reference signal.

In some embodiments, the transceiving module 11 is further configured to report to the network device a second numeric count of consecutive transmissions of the random access preamble on the reference signal, which are unsuccessful due to an LBT failure, before successfully transmitting the random access preamble using the random access resource associated with the reference signal.

In some embodiments, the transceiving module 11 is further configured to, in response to the terminal being not configured with an lbt-FailureRecoveryConfig, report to the network device a second numeric count of consecutive transmissions of the random access preamble on the reference signal, which are unsuccessful due to an LBT failure, before successfully transmitting the random access preamble using the random access resource associated with the reference signal.

In some embodiments, the transceiving module 11 is further configured to, in response to failing to successfully transmit the random access preamble using random access resources associated with any reference signals, select one or more of the reference signals, and report to the network device a third numeric count of consecutive transmissions of the random access preamble on the selected one or more reference signals.

In some embodiments, the transceiving module 11 is further configured to, in response to transmitting the random access preamble using the random access resource associated with the reference signal, and failing to successfully transmit the random access preamble due to an LBT failure, report to the network device the first numeric count of consecutive transmissions of the random access preamble on the reference signal.

In some embodiments, the transceiving module 11 is further configured to, in response to transmitting all random access preambles using the random access resource associated with the reference signal, and failing to successfully transmit each random access preamble due to an LBT failure, report an index of the reference signal to the network device.

In some embodiments, the first numeric count is a sum of a numeric count of successful transmissions of the random access preamble on the reference signal and a second numeric count of consecutive transmissions of the random access preamble on the reference signal, which are unsuccessful due to an LBT failure.

In some embodiments, the transceiving module 11 is further configured to, in response to the terminal being not configured with an lbt-FailureRecoveryConfig, report to the network device the first numeric count of consecutive transmissions of the random access preamble on the reference signal.

In some embodiments, the transceiving module 11 is further configured to report first indication information to the network device, in which the first indication information indicates the numeric count of successful transmissions of the random access preamble on the reference signal or the second numeric count of consecutive transmissions of the random access preamble on the reference signal, which are unsuccessful due to the LBT failure.

In some embodiments, the first numeric count is a numeric count of successful transmissions of the random access preamble on the reference signal.

In some embodiments, the transceiving module 11 is further configured to, in response to the terminal being configured with an lbt-FailureRecoveryConfig, report to the network device the first numeric count of consecutive transmissions of the random access preamble on the reference signal.

In some embodiments, the transceiving module 11 is further configured to report second indication information to the network device, in which the second indication information indicates a second numeric count of consecutive transmissions of the random access preamble on the reference signal, which are unsuccessful due to an LBT failure.

In some embodiments, the transceiving module 11 is further configured to, in response to the numeric count of successful transmissions of the random access preamble on the reference signal being 0, report a first random access information list to the network device, in which the first random access information list includes the first numeric count of an agreed value.

In some embodiments, the transceiving module 11 is further configured to report a second random access information list to the network device, in which the second random access information list includes an information element (IE), and the IE indicates that the numeric count of successful transmissions of the random access preamble is 0.

In some embodiments, the transceiving module 11 is further configured to perform at least one of:
reporting a connection establishment failure report to the network device, in which the connection establishment failure report includes the first numeric count of consecutive transmissions of the random access preamble on the reference signal;
reporting a random access report to the network device, in which the random access report includes the first numeric count of consecutive transmissions of the random access preamble on the reference signal;
reporting a radio link failure (RLF) report to the network device, in which the RLF report includes the first numeric count of consecutive transmissions of the random access preamble on the reference signal;
reporting secondary cell group (SCG) failure information to the network device, in which the SCG failure information includes the first numeric count of consecutive transmissions of the random access preamble on the reference signal;
reporting a successful handover report to the network device, in which the successful handover report includes the first numeric count of consecutive transmissions of the random access preamble on the reference signal;
reporting a primary and secondary cell (PScell) successful addition report to the network device, in which the PScell successful addition report includes the first numeric count of consecutive transmissions of the random access preamble on the reference signal; or
reporting a PScell successful change report to the network device, in which the PScell successful change report includes the first numeric count of consecutive transmissions of the random access preamble on the reference signal.

In some embodiments, the transceiving module 11 is further configured to, in response to transmitting the random access preamble using the random access resource associated with the reference signal by adopting a shared spectrum, report to the network device the first numeric count of consecutive transmissions of the random access preamble on the reference signal.

The communication apparatus 1 is the network device.

The apparatus includes the transceiving module 11.

The transceiving module 11 is configured to receive a first numeric count of consecutive transmissions of a random access preamble on a reference signal reported by a terminal, in which the first numeric count is reported by the terminal in a case of transmitting the random access preamble using a random access resource associated with the reference signal, and the reference signal is an SSB or a CSI-RS.

In some embodiments, the first numeric count is reported by the terminal in a case of successfully transmitting the random access preamble using the random access resource associated with the reference signal.

In some embodiments, the transceiving module 11 is further configured to receive a second numeric count of consecutive transmissions of the random access preamble on the reference signal, which are unsuccessful due to a listen-before-talk (LBT) failure, before the random access preamble is successfully transmitted using the random access resource associated with the reference signal, in which the second numeric count is reported by the terminal.

In some embodiments, the second numeric count is reported by the terminal in a case of being not configured with an lbt-FailureRecoveryConfig.

In some embodiments, the transceiving module 11 is further configured to receive a third numeric count of consecutive transmissions of the random access preamble on one or more selected reference signals, reported by the terminal, in which the third numeric count is reported by the terminal in a case of failing to successfully transmit the random access preamble using random access resources associated with any reference signals, and selecting one or more of the reference signals.

In some embodiments, the first numeric count is reported by the terminal in a case of transmitting the random access preamble using the random access resource associated with the reference signal, and failing to successfully transmit the random access preamble due to an LBT failure.

In some embodiments, the transceiving module 11 is further configured to receive an index of the reference signal reported by the terminal, in which the index of the reference signal is reported by the terminal in a case of transmitting all random access preambles using the random access resource associated with the reference signal, and failing to successfully transmit each random access preamble due to an LBT failure.

In some embodiments, the first numeric count is a sum of a numeric count of successful transmissions of the random access preamble on the reference signal and a second numeric count of consecutive transmissions of the random access preamble on the reference signal, which are unsuccessful due to an LBT failure.

In some embodiments, the first numeric count is reported by the terminal in a case of being not configured with an lbt-FailureRecoveryConfig.

In some embodiments, the transceiving module 11 is further configured to receive first indication information reported by the terminal, in which the first indication information indicates the numeric count of successful transmissions of the random access preamble on the reference signal, or the second numeric count of consecutive transmissions of the random access preamble on the reference signal, which are unsuccessful due to the LBT failure.

In some embodiments, the first numeric count is a numeric count of successful transmissions of the random access preamble on the reference signal.

In some embodiments, the first numeric count is reported by the terminal in a case of being configured with an lbt-FailureRecoveryConfig.

In some embodiments, the transceiving module 11 is further configured to receive second indication information reported by the terminal, in which the second indication information indicates that a second numeric count of consecutive transmissions of the random access preamble on the reference signal, which are unsuccessful due to an LBT failure.

In some embodiments, the transceiving module 11 is further configured to receive a first random access information list reported by the terminal, in which the first random access information list is reported by the terminal in a case that the numeric count of successful transmissions of the random access preamble on the reference signal is 0, and the first random access information list includes the first numeric count of an agreed value.

In some embodiments, the transceiving module 11 is further configured to receive a second random access information list reported by the terminal, in which the second random access information list includes an information element (IE), and the IE indicates that the numeric count of successful transmissions of the random access preamble is 0.

In some embodiments, the transceiving module 11 is further configured to perform at least one of:
receiving a connection establishment failure report reported by the terminal, in which the connection establishment failure report includes the first numeric count of consecutive transmissions of the random access preamble on the reference signal;
receiving a random access report reported by the terminal, in which the random access report includes the first numeric count of consecutive transmissions of the random access preamble on the reference signal;
receiving an RLF report reported by the terminal, in which the RLF report includes the first numeric count of consecutive transmissions of the random access preamble on the reference signal;
receiving SCG failure information reported by the terminal, in which the SCG failure information includes the first numeric count of consecutive transmissions of the random access preamble on the reference signal;
receiving a successful handover report reported by the terminal, in which the successful handover report includes the first numeric count of consecutive transmissions of the random access preamble on the reference signal;
receiving a PScell successful addition report reported by the terminal, in which the PScell successful addition report includes the first numeric count of consecutive transmissions of the random access preamble on the reference signal; or
receiving a PScell successful change report reported by the terminal, in which the PScell successful change report includes the first numeric count of consecutive transmissions of the random access preamble on the reference signal.

In some embodiments, the first numeric count is reported by the terminal in a case of transmitting the random access preamble using the random access resource associated with the reference signal by adopting a shared spectrum.

As for the communication apparatus 1 in the above embodiments, the specific way in which each module performs operations has been described in detail in the embodiments related to the methods, and will not be described in detail here.

The communication apparatus 1 provided in the above embodiments of the present disclosure has the same or similar beneficial effects as the information reporting methods provided in some of the above embodiments, which will not be described here.

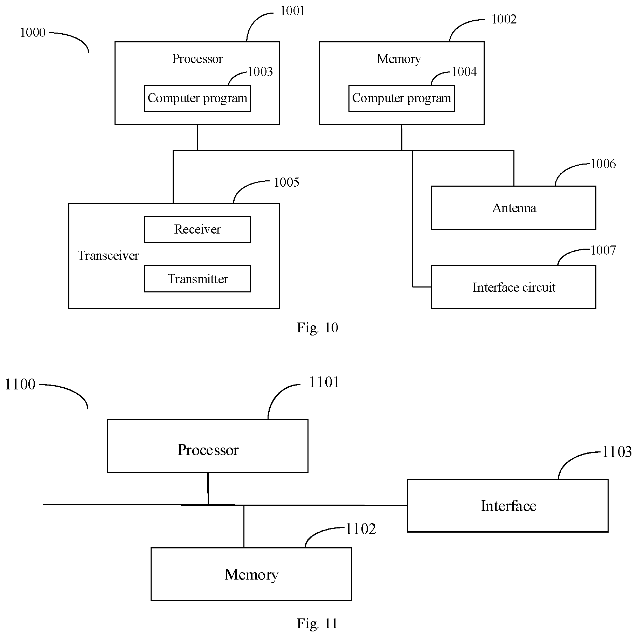

Referring to Fig. 10, Fig. 10 is a schematic diagram of another communication apparatus 1000 provided by an embodiment of the present disclosure. The communication apparatus 1000 may be a network device, or may be a terminal, or may be a chip, a chip system, or a processor that supports the network device to realize the above methods, or may be a chip, a chip system, or a processor that supports the terminal to realize the above methods. The communication apparatus 1000 may be used to implement the methods described in the above method embodiments, and for details, reference may be made to the descriptions in the above method embodiments.

The communication apparatus 1000 may include one or more processors 1001. The processor 1001 may be a general-purpose processor or a special-purpose processor or the like, for example, a baseband processor or a central processor. The baseband processor may be used to process communication protocols and communication data, and the central processor may be used to control the communication apparatus (such as network devices, baseband chips, terminals, terminal chips, DUs or CUs, etc.), execute computer programs, and process data of computer programs.

Optionally, the communication apparatus 1000 may further include one or more memories 1002, on which a computer program 1004 may be stored, and the memory 1002 executes the computer program 1004, so that the communication apparatus 1000 may execute the methods described in the above method embodiments. Optionally, data may also be stored in the memory 1002. The communication apparatus 1000 and the memory 1002 may be set separately or integrated together.

Optionally, the communication apparatus 1000 may further include a transceiver 1005 and an antenna 1006. The transceiver 1005 may be called a transceiving unit, a transceiving machine, a transceiving circuit, etc., and is used to realize a transceiving function. The transceiver 1005 may include a receiver and a transmitter, the receiver may be called a receiving machine or a receiving circuit, etc., for realizing a receiving function, and the transmitter may be called a transmitting machine or a transmitting circuit, etc., and is used to realize a transmitting function.

Optionally, the communication apparatus 1000 may further include one or more interface circuits 1007. The interface circuit 1007 is used to receive code instructions and transmit them to the processor 1001. The processor 1001 executes the code instructions to cause the communication apparatus 1000 to perform the methods described in the above method embodiments.

In a case that the communication apparatus 1000 is a terminal, the transceiver 1005 is used to execute step S21 in Fig. 2; step S31 in Fig. 3; steps S41 and S42 in Fig. 4; steps S51 and S52 in Fig. 5; steps S61 and S62 in Fig. 6; step S71 in Fig. 7; steps S81 and S82 in Fig. 8.

In a case that the communication apparatus 1000 is a network device, the transceiver 1005 is used to execute step S21 in Fig. 2; step S31 in Fig. 3; steps S41 and S42 in Fig. 4; steps S51 and S52 in Fig. 5; steps S61 and S62 in Fig. 6; step S71 in Fig. 7; steps S81 and S82 in Fig. 8.

In an implementation, the processor 1001 may include a transceiver for receiving and transmitting functions. For example, the transceiver may be a transceiving circuit, or an interface, or an interface circuit. The transceiving circuits, interfaces or interface circuits for receiving and transmitting functions may be separated or integrated. The transceiving circuit, interface or interface circuit may be used for reading and writing codes/data, or the transceiving circuit, interface or interface circuit may be used for signal transmission or transfer.

In an implementation, the processor 1001 may store a computer program 1003, and the computer program 1003 runs on the processor 1001 to cause the communication apparatus 1000 to perform the methods described in the above method embodiments. The computer program 1003 may be embedded in the processor 1001, in which case the processor 1001 may be implemented by hardware.

In an implementation, the communication apparatus 1000 may include a circuit, which may realize the function of transmitting or receiving or communicating in the aforementioned method embodiments. The processor and transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, and the like. The processor and transceiver may also be manufactured by various IC process technologies, such as a complementary metal oxide semiconductor (CMOS), a negative channel metal oxide semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus described in the above embodiments may be a terminal or a network device, but the scope of the communication apparatus described in the present disclosure is not limited to this, and the structure of the communication apparatus may not be limited by Fig. 10. The communication apparatus may be a stand-alone device or may be part of a large device. For example, the communication apparatus may be:
(1) an independent integrated circuit IC, or a chip, or a chip system or subsystem;
(2) a set with one or more ICs, optionally, the IC set may also include storage components for storing data and computer programs;
(3) an ASIC, such as a modem;
(4) a module that may be embedded in other devices;
(5) a receiver, a terminal, an intelligent terminal, a cellular phone, a wireless device, a handset, a mobile unit, a vehicle-mounted device, a network device, a cloud device, an artificial intelligence device, etc.
(6) others and so on.

In a case that the communication apparatus may be a chip or a chip system, referring to Fig. 11, Fig. 11 is a schematic diagram of a chip provided in an embodiment of the present disclosure.

A chip 1100 includes a processor 1101 and an interface 1103. One or more processors 1101 may be provided, and multiple interfaces 1103 may be provided.

In a case where the chip is used to realize the functions of the terminal in the embodiment of the present disclosure,
the interface 1103 is configured to receive code instructions and transmit them to the processor; and
the processor 1101 is configured to execute the code instructions to perform the information reporting methods as described in some embodiments above.

In a case that the chip is used to realize the functions of the network device in the embodiment of the present disclosure,
the interface 1103 is configured to receive code instructions and transmit them to the processor; and
the processor 1101 is configured to execute the code instructions to perform the information reporting methods as described in some embodiments above.

Optionally, the chip 1100 further includes a memory 1102 for storing necessary computer programs and data.

Those skilled in the art may also understand that various illustrative logical blocks and steps listed in the embodiments of the present disclosure may be implemented by electronic hardware, computer software, or a combination of both. Whether this function is realized by hardware or software depends on the specific application and the design requirements of the whole system. Those skilled in the art may use various methods to realize the described functions for each specific application, but this realization should not be understood as beyond the scope of protection of the embodiments of the present disclosure.

An embodiment of the present disclosure also provides an information reporting system, which includes a communication apparatus as a terminal and a communication apparatus as a network device in the embodiment of Fig. 9, or the system includes a communication apparatus as a terminal and a communication apparatus as a network device in the embodiment of Fig. 10.

The present disclosure also provides a readable storage medium on which instructions are stored, which, when executed by a computer, realize the functions of any of the above method embodiments.

The present disclosure also provides a computer program product which, when executed by a computer, realizes the functions of any of the above method embodiments.

The above embodiments may be realized in whole or in part by software, hardware, firmware or any combination thereof. When implemented in software, they may be in whole or in part implemented in the form of a computer program product. The computer program product includes one or more computer programs. When the computer program is loaded and executed on a computer, the processes or functions according to the embodiments of the present disclosure are generated in whole or in part. The computer may be a general-purpose computer, a special-purpose computer, a computer network, or other programmable apparatuses. The computer program may be stored in a computer-readable storage medium or transmitted from one computer-readable storage medium to another. For example, the computer program may be transmitted from a website, computer, server or data center to another website, computer or data center in a wired (such as a coaxial cable, an optical fiber, a digital subscriber line (DSL)) or wireless (such as infrared, wireless, microwave, etc.) manner. The computer-readable storage medium may be any available medium that a computer may access or a data storage device such as a server, a data center and the like that contains one or more available media. The available medium may be a magnetic medium (e.g., a floppy disk, a hard disk, a magnetic tape), an optical medium (e.g., a high-density digital video disc (DVD)), or a semiconductor medium (e.g., a solid state disk (SSD)) and the like.

Those ordinary skilled in the art may understand that the first, second, and other numeral numbers involved in the present disclosure are distinguished only for convenience of description, and are not intended to limit the scope of embodiments of the present disclosure, and nor are they intended to represent a sequential order.

The term "at least one" used in the present disclosure may also be described as one or more, and the term "a plurality of" may cover two, three, four or more, which are not limited in the present disclosure. In embodiments of the present disclosure, for a certain kind of technical feature, the technical features in this kind of technical feature are distinguished by terms like "first", "second", "third", "A", "B", "C" and "D", etc., and these technical features described with the "first", "second", "third", "A", "B", "C" and "D" have no order of precedence or size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) may be made based on the above tables. The names of parameters shown in the titles of the above tables may also adopt other names understandable by the communication apparatus, and the values or representations of the parameters may also be other values or representations understandable by the communication apparatus. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

Those ordinary skilled in the art may appreciate that the units and algorithm steps of various examples described in conjunction with embodiments disclosed herein may be implemented by the electronic hardware, or a combination of the computer software and the electronic hardware. Whether these functions are executed by the hardware or the software depends on the specific application and design constraints of the technical solution. For each particular application, those skilled in the art may use different methods to implement the described functions, but such an implementation should not be considered as extending beyond the scope of the present disclosure.

Those skilled in the art may clearly understand that for the convenience and brevity of the description, for the specific working process of the above-described system, apparatus and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. An information reporting method, performed by a terminal, comprising:
in response to transmitting a random access preamble using a random access resource associated with a reference signal, reporting to a network device a first numeric count of consecutive transmissions of the random access preamble on the reference signal, wherein the reference signal is a synchronization signal block (SSB) or a channel state information reference signal (CSI-RS).

2. The method according to claim 1, wherein in response to transmitting the random access preamble using the random access resource associated with the reference signal, reporting to the network device the first numeric count of consecutive transmissions of the random access preamble on the reference signal comprises:
in response to successfully transmitting the random access preamble using the random access resource associated with the reference signal, reporting to the network device the first numeric count of consecutive transmissions of the random access preamble on the reference signal.

3. The method according to claim 2, further comprising:
reporting to the network device a second numeric count of consecutive transmissions of the random access preamble on the reference signal, which are unsuccessful due to a listen-before-talk (LBT) failure, before successfully transmitting the random access preamble using the random access resource associated with the reference signal.

4. The method according to claim 2 or 3, further comprising:
in response to the terminal being not configured with an LBT failure recovery configuration (lbt-FailureRecoveryConfig), reporting to the network device a second numeric count of consecutive transmissions of the random access preamble on the reference signal, which are unsuccessful due to a listen-before-talk (LBT) failure, before successfully transmitting the random access preamble using the random access resource associated with the reference signal.

5. The method according to claim 1, further comprising:
in response to failing to successfully transmit the random access preamble using random access resources associated with any reference signals, selecting one or multiple reference signals, and reporting to the network device a third numeric count of consecutive transmissions of the random access preamble on the selected one or multiple reference signals.

6. The method according to claim 1, wherein in response to transmitting the random access preamble using the random access resource associated with the reference signal, reporting to the network device the first numeric count of consecutive transmissions of the random access preamble on the reference signal comprises:
in response to transmitting the random access preamble using the random access resource associated with the reference signal, and failing to successfully transmit the random access preamble due to an LBT failure, reporting to the network device the first numeric count of consecutive transmissions of the random access preamble on the reference signal.

7. The method according to claim 1, further comprising:
in response to transmitting all random access preambles using the random access resource associated with the reference signal, and failing to successfully transmit each random access preamble due to an LBT failure, reporting an index of the reference signal to the network device.

8. The method according to any one of claims 1 to 6, wherein the first numeric count is a sum of a numeric count of successful transmissions of the random access preamble on the reference signal and a second numeric count of consecutive transmissions of the random access preamble on the reference signal, which are unsuccessful due to an LBT failure.

9. The method according to claim 8, wherein reporting to the network device the first numeric count of consecutive transmissions of the random access preamble on the reference signal comprises:
in response to the terminal being not configured with an lbt-FailureRecoveryConfig, reporting to the network device the first numeric count of consecutive transmissions of the random access preamble on the reference signal.

10. The method according to claim 8 or 9, further comprising:
reporting first indication information to the network device, wherein the first indication information indicates the numeric count of successful transmissions of the random access preamble on the reference signal or the second numeric count of consecutive transmissions of the random access preamble on the reference signal, which are unsuccessful due to the LBT failure.

11. The method according to any one of claims 1 to 6, wherein the first numeric count is a numeric count of successful transmissions of the random access preamble on the reference signal.

12. The method according to claim 11, wherein reporting to the network device the first numeric count of consecutive transmissions of the random access preamble on the reference signal comprises:
in response to the terminal being configured with an lbt-FailureRecoveryConfig, reporting to the network device the first numeric count of consecutive transmissions of the random access preamble on the reference signal.

13. The method according to claim 11 or 12, further comprising:
reporting second indication information to the network device, wherein the second indication information indicates a second numeric count of consecutive transmissions of the random access preamble on the reference signal, which are unsuccessful due to an LBT failure.

14. The method according to any one of claims 11 to 13, wherein reporting to the network device the first numeric count of consecutive transmissions of the random access preamble on the reference signal comprises:
in response to the numeric count of successful transmissions of the random access preamble on the reference signal being 0, reporting a first random access information list to the network device, wherein the first random access information list comprises the first numeric count of an agreed value.

15. The method according to any one of claims 11 to 13, wherein reporting to the network device the first numeric count of consecutive transmissions of the random access preamble on the reference signal comprises:
reporting a second random access information list to the network device, wherein the second random access information list comprises an information element (IE), and the IE indicates that the numeric count of successful transmissions of the random access preamble is 0.

16. The method according to any one of claims 1 to 15, wherein reporting to the network device the first numeric count of consecutive transmissions of the random access preamble on the reference signal comprises at least one of:
reporting a connection establishment failure report to the network device, wherein the connection establishment failure report comprises the first numeric count of consecutive transmissions of the random access preamble on the reference signal;
reporting a random access report to the network device, wherein the random access report comprises the first numeric count of consecutive transmissions of the random access preamble on the reference signal;
reporting a radio link failure (RLF) report to the network device, wherein the RLF report comprises the first numeric count of consecutive transmissions of the random access preamble on the reference signal;
reporting secondary cell group (SCG) failure information to the network device, wherein the SCG failure information comprises the first numeric count of consecutive transmissions of the random access preamble on the reference signal;
reporting a successful handover report to the network device, wherein the successful handover report comprises the first numeric count of consecutive transmissions of the random access preamble on the reference signal;
reporting a primary and secondary cell (PScell) successful addition report to the network device, wherein the PScell successful addition report comprises the first numeric count of consecutive transmissions of the random access preamble on the reference signal; or
reporting a PScell successful change report to the network device, wherein the PScell successful change report comprises the first numeric count of consecutive transmissions of the random access preamble on the reference signal.

17. The method according to any one of claims 1 to 16, wherein in response to transmitting the random access preamble using the random access resource associated with the reference signal, reporting to the network device the first numeric count of consecutive transmissions of the random access preamble on the reference signal comprises:
in response to transmitting the random access preamble using the random access resource associated with the reference signal by adopting a shared spectrum, reporting to the network device the first numeric count of consecutive transmissions of the random access preamble on the reference signal.

18. An information reporting method, performed by a network device, comprising:
receiving a first numeric count of consecutive transmissions of a random access preamble on a reference signal, reported by a terminal, wherein the first numeric count is reported by the terminal in a case of transmitting the random access preamble using a random access resource associated with the reference signal, and the reference signal is an SSB or a CSI-RS.

19. The method according to claim 18, wherein the first numeric count is reported by the terminal in a case of successfully transmitting the random access preamble using the random access resource associated with the reference signal.

20. The method according to claim 19, further comprising:
receiving a second numeric count of consecutive transmissions of the random access preamble on the reference signal, which are unsuccessful due to a listen-before-talk (LBT) failure, before the random access preamble is successfully transmitted using the random access resource associated with the reference signal, wherein the second numeric count is reported by the terminal.

21. The method according to claim 20, wherein the second numeric count is reported by the terminal in a case of being not configured with an lbt-FailureRecoveryConfig.

22. The method according to claim 18, further comprising:
receiving a third numeric count of consecutive transmissions of the random access preamble on one or more selected reference signals, reported by the terminal, wherein the third numeric count is reported by the terminal in a case of failing to successfully transmit the random access preamble using random access resources associated with any reference signals, and selecting one or more of the reference signals.

23. The method according to claim 18, wherein the first numeric count is reported by the terminal in a case of transmitting the random access preamble using the random access resource associated with the reference signal, and failing to successfully transmit the random access preamble due to an LBT failure.

24. The method according to claim 18, further comprising:
receiving an index of the reference signal reported by the terminal, wherein the index of the reference signal is reported by the terminal in a case of transmitting all random access preambles using the random access resource associated with the reference signal, and failing to successfully transmit each random access preamble due to an LBT failure.

25. The method according to any one of claims 18 to 23, wherein the first numeric count is a sum of a numeric count of successful transmissions of the random access preamble on the reference signal and a second numeric count of consecutive transmissions of the random access preamble on the reference signal, which are unsuccessful due to an LBT failure.

26. The method according to claim 25, wherein the first numeric count is reported by the terminal in a case of being not configured with an lbt-FailureRecoveryConfig.

27. The method according to claim 25 or 26, further comprising:
receiving first indication information reported by the terminal, wherein the first indication information indicates the numeric count of successful transmissions of the random access preamble on the reference signal, or the second numeric count of consecutive transmissions of the random access preamble on the reference signal, which are unsuccessful due to the LBT failure.

28. The method according to any one of claims 18 to 23, wherein the first numeric count is a numeric count of successful transmissions of the random access preamble on the reference signal.

29. The method according to claim 28, wherein the first numeric count is reported by the terminal in a case of being configured with an lbt-FailureRecoveryConfig.

30. The method according to claim 28 or 29, further comprising:
receiving second indication information reported by the terminal, wherein the second indication information indicates that a second numeric count of consecutive transmissions of the random access preamble on the reference signal, which are unsuccessful due to an LBT failure.

31. The method according to any one of claims 28 to 30, wherein receiving the first numeric count of consecutive transmissions of the random access preamble on the reference signal reported by the terminal comprises:
receiving a first random access information list reported by the terminal, wherein the first random access information list is reported by the terminal in a case that the numeric count of successful transmissions of the random access preamble on the reference signal is 0, and the first random access information list comprises the first numeric count of an agreed value.

32. The method according to any one of claims 28 to 30, wherein receiving the first numeric count of consecutive transmissions of the random access preamble on the reference signal reported by the terminal comprises:
receiving a second random access information list reported by the terminal, wherein the second random access information list comprises an information element (IE), and the IE indicates that the numeric count of successful transmissions of the random access preamble is 0.

33. The method according to any one of claims 18 to 30, wherein receiving the first numeric count of consecutive transmissions of the random access preamble on the reference signal reported by the terminal comprises at least one of:
receiving a connection establishment failure report reported by the terminal, wherein the connection establishment failure report comprises the first numeric count of consecutive transmissions of the random access preamble on the reference signal;
receiving a random access report reported by the terminal, wherein the random access report comprises the first numeric count of consecutive transmissions of the random access preamble on the reference signal;
receiving an RLF report reported by the terminal, wherein the RLF report comprises the first numeric count of consecutive transmissions of the random access preamble on the reference signal;
receiving SCG failure information reported by the terminal, wherein the SCG failure information comprises the first numeric count of consecutive transmissions of the random access preamble on the reference signal;
receiving a successful handover report reported by the terminal, wherein the successful handover report comprises the first numeric count of consecutive transmissions of the random access preamble on the reference signal;
receiving a PScell successful addition report reported by the terminal, wherein the PScell successful addition report comprises the first numeric count of consecutive transmissions of the random access preamble on the reference signal; or
receiving a PScell successful change report reported by the terminal, wherein the PScell successful change report comprises the first numeric count of consecutive transmissions of the random access preamble on the reference signal.

34. The method according to any one of claims 18 to 30, wherein the first numeric count is reported by the terminal in a case of transmitting the random access preamble using the random access resource associated with the reference signal by adopting a shared spectrum.

35. A communication apparatus, comprising:
a transceiving module configured to, in response to transmitting a random access preamble using a random access resource associated with a reference signal, report to a network device a first numeric count of consecutive transmissions of the random access preamble on the reference signal, wherein the reference signal is an SSB or a CSI-RS.

36. A communication apparatus, comprising:
a transceiving module configured to receive a first numeric count of consecutive transmissions of a random access preamble on a reference signal reported, by a terminal, wherein the first numeric count is reported by the terminal in a case of transmitting the random access preamble using a random access resource associated with the reference signal, and the reference signal is an SSB or a CSI-RS.

37. A communication apparatus, comprising a processor and a memory, wherein a computer program is stored in the memory, and the processor is configured execute the computer program stored in the memory to cause the apparatus to perform the method according to any one of claims 1 to 17, or the processor executes the computer program stored in the memory to cause the apparatus to perform the method according to any one of claims 18 to 34.

38. A communication apparatus, comprising a processor and an interface circuit,
wherein the interface circuit is configured to receive code instructions and transmit the code instructions to the processor, and
the processor is configured to run the code instructions to perform the method according to any one of claims 1 to 17, or to run the code instructions to perform the method according to any one of claims 18 to 34.

39. A computer-readable storage medium, for storing instructions which, when executed, cause the method according to any one of claims 1 to 17 to be implemented, or which, when executed, cause the method according to any one of claims 18 to 34 to be implemented.
